# EUROPEAN PATENT APPLICATION

(11) **EP 4 694 325 A1**
(43) Date of publication of application: **11.02.2026**
(21) Application number: 23931554.2
(22) Date of filing: 07.04.2023
(51) Int. Cl.: H04W 36/00

(54) **MEASUREMENT METHOD, TERMINAL DEVICE, AND THIRD NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); ZHANG, Jinyu, Dongguan, Guangdong 523860 (CN)
(74) Representative: Grassi, Stefano
(86) International application number: PCT/CN2023/087063
(87) International publication number: WO 2024/207493

(57) **Abstract**

The present application relates to a measurement method, a terminal device, and a third network device. The measurement method comprises: a terminal device sends a first uplink signal to N network devices, wherein the first uplink signal is used for performing measurement to determine whether to trigger the terminal device to perform cell handover, and N is a positive integer. According to embodiments of the present application, a signal can be accurately measured, the mobility management of a terminal device is completed, and the communication quality is ensured.

## Description

### TECHNICAL FIELD

The present disclosure relates to the field of communications, and more particularly to a measurement method, a terminal device, a third network device, a chip, a computer-readable storage medium, a computer program product, and a computer program.

### BACKGROUND

In a communication system, a terminal device measures a downlink signal from a serving cell and a neighboring cell, and determines whether to perform cell reselection or cell handover, so that the terminal device is always able to connect to a cell with better signal quality during movement and ensure quality of subsequent communications. However, in some scenarios, due to limitations of service characteristics, capability limitations, operating power consumption, etc. of the terminal device, the terminal device may not be able to accurately measure the signal, thereby affecting the communication quality.

### SUMMARY

An embodiment of the present disclosure provides a measurement method, including a following operation.

A terminal device sends first uplink signals to N network devices. The first uplink signals are used for measurement to determine whether to trigger the terminal device to perform cell handover, where N is a positive integer.

An embodiment of the present disclosure provides a measurement method, including a following operation.

A third network device receives a first uplink signal from a terminal device. The first uplink signal is used for measurement to determine whether to trigger the terminal device to perform cell handover.

An embodiment of the present disclosure provides a terminal device including a first communication module.

The first communication module is configured to send first uplink signals to N network devices. The first uplink signals are used for measurement to determine whether to trigger the terminal device to perform cell handover, where N is a positive integer.

An embodiment of the present disclosure provides a third network device, including a second communication module.

The second communication module is configured to receive a first uplink signal from a terminal device, where the first uplink signal is used for measurement to determine whether to trigger the terminal device to perform cell handover.

An embodiment of the present disclosure provides a terminal device including a processor and a memory, where the memory is configured to store a computer program, and the processor is configured to invoke and run the computer program stored in the memory, to enable the terminal device to perform the aforementioned sidelink communication method.

An embodiment of the present disclosure provides a third network device including a processor and a memory, where the memory is configured to store a computer program, and the processor is configured to invoke and run the computer program stored in the memory, to enable the third network device to perform the aforementioned sidelink communication method.

An embodiment of the present disclosure provides a chip configured to implement the aforementioned measurement method.

Specifically, the chip includes a processor configured to invoke and run a computer program from a memory, to enable a device on which the chip is mounted to perform the aforementioned measurement method.

An embodiment of the present disclosure provides a computer-readable storage medium configured to store a computer program, where the computer program causes a device to perform the aforementioned measurement method when the computer program is executed by the device.

An embodiment of the present disclosure provides a computer program product including computer program instructions, where the computer program instructions cause a computer to perform the aforementioned measurement method.

An embodiment of the present disclosure provides a computer program, where the computer program causes a computer to perform the aforementioned measurement method when the computer program is executed on the computer.

In the embodiments of the present disclosure, the terminal device sends the first uplink signal to the network device, and the network device receives the first uplink signal. The first uplink signal is used for measurement to determine whether to trigger the terminal to perform cell handover. Therefore, under the impact of limitations of service characteristics, capability limitations, operating power consumption of the terminal device, the signal can be accurately measured, the mobility management of the terminal device can be completed, thereby guaranteeing the communication quality.

### BRIEF DESCRIPTION OF THE DRAWINGS

FIG. 1 is a schematic diagram of a communication system according to an embodiment of the present disclosure.
FIG. 2 is a schematic diagram of a zero-power-consumption communication network according to an embodiment of the present disclosure.
FIG. 3 is a schematic diagram of a principle of Radio Frequency (RF) power harvesting according to an embodiment of the present disclosure.
FIG. 4 is a schematic diagram of a principle of back-scattering communication according to an embodiment of the present disclosure.
FIG. 5 is a schematic diagram of a principle of resistive load modulation according to an embodiment of the present disclosure.
FIG. 6 is a schematic flowchart of a measurement method according to an embodiment of the present disclosure.
FIG. 7 is a schematic flowchart of a measurement method according to another embodiment of the present disclosure.
FIG. 8 is a schematic diagram of an interaction between a terminal device and a network device in an application example according to an embodiment of the present disclosure.
FIG. 9 is a flowchart of a measurement method in an application example according to an embodiment of the present disclosure.
FIG. 10 is a schematic diagram of an interaction between a terminal device and a network device in another application example according to an embodiment of the present disclosure.
FIG. 11 is a flowchart of a measurement method in another application example according to an embodiment of the present disclosure.
FIG. 12 is a schematic block diagram of a terminal device according to an embodiment of the present disclosure.
FIG. 13 is a schematic block diagram of a third network device according to an embodiment of the present disclosure.
FIG. 14 is a schematic block diagram of a communication device according to an embodiment of the present disclosure.
FIG. 15 is a schematic block diagram of a chip according to an embodiment of the present disclosure.
FIG. 16 is a schematic block diagram of a communication system according to an embodiment of the present disclosure.

### DETAILED DESCRIPTION

The technical solution in the embodiments of the disclosure will be described below in conjunction with the drawings in the embodiments of the disclosure.

The technical solution in the embodiments of the present disclosure may be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system of NR system, an LTE-based access to unlicensed spectrum (LTE-U) system, a NR-based access to unlicensed spectrum (NR-U) system, a Non-Terrestrial Networks (NTN) system, a Universal Mobile Telecommunications System (UMTS), a Wireless Local Area Network (WLAN), a Wireless Fidelity (Wi-Fi), a 5th-Generation (5G) system, or other communication systems.

In general, traditional communication systems support a limited number of connections and the connections are easy to implement. However, with the development of communication technology, mobile communication systems will not only support traditional communication, but also support terminal-to-terminal direct communication, for example, Device To Device (D2D) communication, Machine To Machine (M2M) communication, Machine Type Communication (MTC), Vehicle To Vehicle (V2V) communication, or Vehicle To Everything (V2X) communication, etc. The embodiments of the present disclosure may also be applied to these communication systems

In an embodiment, the communication system in embodiments of the present disclosure may be applied to a Carrier Aggregation (CA) scenario, a Dual Connectivity (DC) scenario, or a Standalone (SA) networking scenario.

In an embodiment, the communication system in the embodiments of the present disclosure may be applied to an unlicensed spectrum, and the unlicensed spectrum may also be considered as a shared spectrum. Alternatively, the communication system in the embodiments of the present disclosure may also be applied to a licensed spectrum, and the licensed spectrum may also be considered as a non-shared spectrum.

The embodiments of the present disclosure are described in connection with a network device and a terminal device. The terminal device may also be referred to as User Equipment (UE), an access terminal, a subscriber unit, a subscriber station, a mobile station, a remote terminal, a mobile device, a user terminal, a terminal, a wireless communication device, a user agent or a user device, etc.

The terminal device may be a STATION (ST or STA) in a WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolutional Public Land Mobile Network (PLMN) network, etc.

In the embodiments of the present disclosure, the terminal device may be deployed on land, and include an indoor or outdoor device, a hand-held device, a wearable device or a vehicle-mounted device. The terminal device may also be deployed on the water (such as on the ships, etc.) or under the water (such as submarines, etc.). The terminal device may also be deployed in the air (such as, in airplanes, in balloons and in satellites, etc.).

In the embodiments of the present disclosure, the terminal device may be a mobile phone, a Pad, a computer with wireless transceiver function, a Virtual Reality (VR) terminal device, an Augmented Reality (AR) terminal device, a terminal device in Personal Internet of Things (PIoT), a wireless terminal device in the industrial control, a wireless terminal device in the self driving, a wireless terminal device in the remote medical, a wireless terminal device in the smart grid, a wireless terminal device in the transportation safety, a wireless terminal device in the smart city, or a wireless terminal device in the smart home, etc.

By way of example and not as a limitation, in the embodiments of the present disclosure, the terminal device may also be a wearable device. The wearable device may also be referred to as a wearable smart device, which is a general term of wearable devices that are intelligently designed and developed by applying wearable technology to daily wear, such as, glasses, gloves, watches, clothing and shoes. The wearable device is a portable device that is worn directly on the body or integrated into the user's clothes or accessories. The wearable device is not only a type of hardware device, but also implements powerful functions through software support, data interaction and cloud interaction. The generalized wearable smart device has full functions and a large size, and the generalized wearable smart device may implement complete or partial functions without relying on smart phones, such as smart watches or smart glasses, and the generalized wearable smart device only focus on certain application functions and need to be used in conjunction with other devices (such as, smart phones), such as, various smart bracelets and smart jewelry for monitoring physical signs.

In the embodiments of the present disclosure, the network device may be a device configured to communicate with a mobile device, and the network device may be an Access Point (AP) in a WLAN, a Base Transceiver Station (BTS) in a GSM or CDMA, a NodeB (NB) in a WCDMA, an evolutional Node B (eNB or eNodeB) in an LTE, a relay station or an access point, a vehicle-mounted device, a wearable device, a network device (gNB) in an NR network, or a network device in a future evolved PLMN network or a network device in an NTN network, etc.

By way of example and not as a limitation, in the embodiments of the present disclosure, the network device may have mobility characteristics, for example, the network device may be a mobile device. Optionally, the network device may be a satellite, a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and the like. Optionally, the network device may also be a base station located on land, water, etc.

In the embodiments of the present disclosure, the network device may provide a service for a cell, and the terminal device communicates with the network device through transmission resources (e.g. frequency resources, or spectrum resources) used by the cell. The cell may be a cell corresponding to the network device (e.g. base station), and the cell may belong to a macro base station or a base station corresponding to a small cell. The small cell may include a metro cell, a micro cell, a pico cell, a femto cell, etc. These small cells have characteristics of small coverage and low transmission power, and these small cells are suitable for providing a high-rate data transmission service.

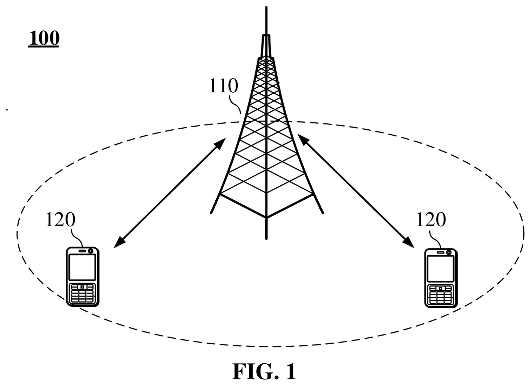

FIG. 1 exemplarily illustrates a communication system 100. The communication system includes one network device 110 and two terminal devices 120. In a possible implementation, the communication system 100 may include multiple network devices 110, and other numbers of terminal devices 120 may be included within the coverage of each network device 110, which is not limited in the embodiments of the present disclosure.

In a possible implementation, the communication system 100 may further include other network entities, such as a Mobility Management Entity (MME), an Access and Mobility Management Function (AMF), which are not limited in the embodiments of the present disclosure.

It is to be understood that a device having a communication function in the network or system in the embodiments of the present disclosure may be referred to as a communication device. The communication system illustrated in FIG. 1 is taken as an example, the communication device may include a network device and a terminal device that both have the communication function, and the network device and the terminal device may be specific devices described above, which will not be described herein. The communication device may also include other devices in the communication system, such as, network controllers, mobility management entities and other network entities, which are not limited in the embodiments of the present disclosure.

It is to be understood that the terms "system" and "network" are often used interchangeably herein. In the present disclosure, the term "and/or" is only an association relationship describing associated objects and represents that three relationships may exist. For example, A and/or B may represent three conditions: i.e., independent existence of A, existence of both A and B and independent existence of B. In addition, the character "/" in the disclosure generally indicates that the relationship between the related objects is "or".

It is to be understood that the reference to "indication" in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

In the description of the embodiments of the present disclosure, the term "correspondence" may mean that there is a direct correspondence or an indirect correspondence between the two objects, may also mean that there is an association relationship between the two objects, and may also be a relationship between indication and being indicated, configuration and being configured, etc.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

First, the communication based on zero-power-consumption device is described.

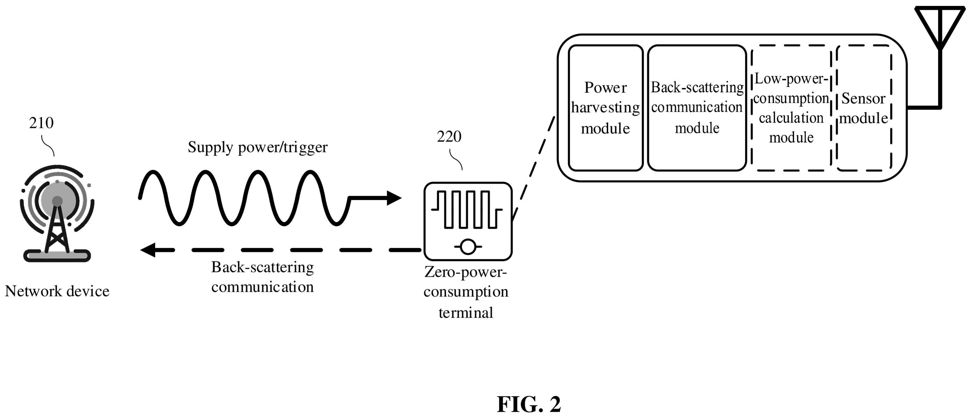

Power harvesting and back-scattering communication technologies are used in the zero-power-consumption communication. FIG. 2 shows a schematic diagram of a zero-power-consumption communication network. As shown in FIG. 2, the zero-power-consumption communication network includes a network device 210 and a zero-power-consumption terminal 220 (which may also be referred to as a zero-power-consumption device). The network device 210 is configured to: send a wireless power supplying signal and a downlink communication signal (such as a trigger signal) to the zero-power-consumption terminal 220; and receive a back-scattering signal from the zero-power-consumption terminal 220. A basic zero-power-consumption terminal 220 includes a power harvesting module, a back-scattering communication module, and a low-power-consumption calculation module. In addition, the zero-power-consumption device may also be provided with a memory or a sensor, and is configured to store some basic information (such as an item identifier) or acquire sensing data such as an environment temperature and an environment humidity.

The key technologies of the zero-power-consumption communication mainly include the RF power harvesting and back-scattering communication.

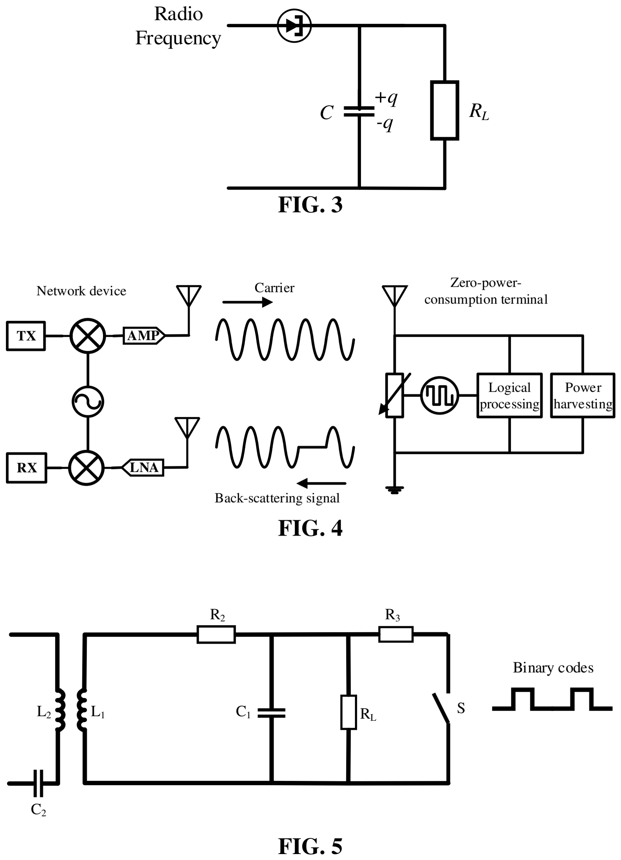

FIG. 3 shows a diagram of a principle of RF power harvesting. As shown in FIG. 3, the RF power harvesting module harvests space electromagnetic wave energy based on the principle of electromagnetic induction, so as to obtain energy required to drive the zero-power-consumption device, for example, for driving a low-power-consumption demodulation and modulation module, a sensor, and internal storage reading. Therefore, the zero-power-consumption device does not need a traditional battery.

FIG. 4 shows a diagram of a principle of back-scattering communication. As shown in FIG. 4, a zero-power-consumption terminal receives a wireless signal sent by a network device; modulates the wireless signal; loads information to be sent; and radiates the modulated signal from an antenna. Such information transmission process is referred to as the back-scattering communication. The back-scattering and load modulation functions are inextricably linked. The load modulation is to adjust and control circuit parameters of an oscillation circuit of the zero-power-consumption device according to the beat of a data stream, so as to enable the parameters such as the impedance of the electronic tag to vary accordingly, thereby completing a modulation process. A load modulation technology mainly includes resistive load modulation and capacitive load modulation. FIG. 5 shows a schematic diagram of resistive load modulation. In the resistive load modulation, a load R_{L} is connected in parallel with a resistor *R₃*, and the resistor *R*₃ is turned on or turned off based on control of a binary data stream (e.g. the resistor *R*₃ is turned on or turned off by controlling the switch S), as shown in FIG. 5. A circuit voltage is changed due to the turn-on and off of the resistor, so that Amplitude Shift Keying (ASK) is implemented, i.e., signals are modulated and sent by adjusting amplitudes of the back-scattering signals of the zero-power-consumption device. Similarly, during capacitive load modulation, changes in a circuit resonance frequency may be achieved by turning on or off a capacitor, so as to implement Frequency Shift Keying (FSK), i.e., the signals are modulated and sent by adjusting the working frequencies of back-scattering signals of the zero-power-consumption device.

Therefore, the zero-power-consumption device performs information modulation on an incoming-wave signal by means of load modulation, and a back-scattering communication process is implemented. Therefore, the zero-power-consumption device has significant advantages.
1. The terminal does not actively send a signal, and thus the terminal does not need a complex RF link, such as, a Power Amplifier (PA), a RF filter, and the like.
2. The terminal does not actively generate a high-frequency signal, and thus the terminal does not need a high-frequency crystal oscillator.
3. The terminal does not need to consume the energy thereof for transmission with the help of the back-scattering communication.

The data transmitted by the zero-power-consumption terminal (such as an electronic tag) may use codes of different forms to represent binary "1" and "0". A RF identification system generally uses one of the following coding methods: Non Return Zero (NRZ) coding, Manchester coding, Unipolar RZ coding, Differential Bi-Phase (DBP) coding, the Miller coding, differential dynamic coding, etc. Generally speaking, different pulse signals are used to represent 0 and 1.

Secondly, the application scenarios of the zero-power-consumption communication is described.

Since the zero-power-consumption communication has significant advantages, such as, extremely low cost, zero power consumption, and small size, the zero-power-consumption communication may be widely applied in various industries, such as, logistics for vertical industries, smart warehousing, smart agriculture, energy and power, industrial Internet, etc.. The zero-power-consumption communication may also be applied to personal applications, such as, smart wearables and smart homes.

Thirdly, the power supplying signal and the trigger signal in the zero-power-consumption communication system are described.

### 1. Power supplying signal

A carrier of the power supplying signal may be a base station, a smart phone, a smart gateway, a charging station, a micro base station, etc.

A frequency band of a radio wave used for power supplying may be a low frequency, an intermediate frequency, a high frequency, etc.;
A waveform of the radio wave used for power supplying may be a sine wave, a square wave, a triangular wave, a pulse wave, a rectangular wave, etc. In addition, the radio wave may be a continuous wave or a discontinuous wave (i.e., interruption within a time duration is allowed).

The power supplying signal may be a signal specified in the communication standard, such as, a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), a Physical Downlink Shared Channel (PDSCH), and a Physical Broadcast Channel (PBCH).

### 2. Trigger signal/control information

A carrier of the trigger signal may be a base station, a smart phone, a smart gateway, etc.

A frequency band of a radio wave used for power supplying may be a low frequency, an intermediate frequency, a high frequency, etc.

A waveform of the radio wave used for power supplying may be a sine wave, a square wave, a triangular wave, a pulse wave, a rectangular wave, etc. In addition, the radio wave may be a continuous wave or a discontinuous wave (i.e., interruption within a time duration is allowed).

The trigger signal may be a signal specified in the communication standard, such as, an SRS, a PUSCH, a PRACH, a PUCCH, a PDCCH, a PDSCH, a PBCH, etc.; or, the trigger signal may be a new signal.

Fourthly, a category of zero-power-consumption terminals is described.

The zero-power-consumption terminals may be classified into a passive zero-power-consumption terminal, a semi-passive zero-power-consumption terminal, and an active zero-power-consumption terminal based on their energy source and usage mode.

In the passive zero-power-consumption terminal, there is no need to provide a battery, and when the zero-power-consumption terminal approaches the network device, the zero-power-consumption terminal is within a near field range formed through radiation of an antenna of the network device. Herein, the network device may be such as, a reader-writer of a Radio Frequency Identification (RFID) system. Therefore, an antenna of the zero-power-consumption terminal generates an induction current through electromagnetic induction, and then the induction current drives a low-power-consumption chip circuit of the zero-power-consumption terminal, so as to demodulate a forward link signal and modulate a reverse link signal. For a back-scattering link, the zero-power-consumption terminal transmits the signal by means of back-scattering.

Therefore, regardless of a forward link or a reverse link, the passive zero-power-consumption terminal does not need to be driven by a built-in battery, so that the passive zero-power-consumption terminal is a true zero-power-consumption terminal.

The passive zero-power-consumption terminal does not need the battery, and an RF circuit and a baseband circuit thereof are very simple, for example, devices such as a Low Noise Amplifier (LNA), a PA, a crystal oscillator, and an Analog-to-Digital Converter (ADC) are not required, so that the passive zero-power-consumption terminal has various advantages of being small in size, light in weight, cheap in price, and long in service life.

The passive zero-power-consumption terminal may also support other manners of the power harvesting. By performing the power harvesting on the energy (such as, the light energy, the heat energy, the kinetic energy, the mechanical energy) in the environment, the energy for driving a circuit is obtained and the terminal device is supported to communicate.

In the semi-passive zero-power-consumption terminal, the battery is also not provided, but the RF power harvesting module may be used to harvest radio wave energy, or the RF power harvesting module may be used to harvest the energy (such as, the solar energy, the thermal energy, the mechanical vibration energy) in the environment, and the harvested energy is stored in an energy storage unit (for example, a capacitor). After obtaining the energy, the energy storage unit may drive the low-power-consumption chip circuit of the zero-power-consumption terminal, so as to demodulate the forward link signal and modulate the reverse link signal. For the back-scattering link, the zero-power-consumption terminal transmits the signal by means of back-scattering.

Therefore, regardless of a forward link or a reverse link, the semi-passive zero-power-consumption terminal does not need to be driven by a built-in battery, and although energy stored by the capacitor is used during operation, the energy is derived from radio energy harvested by the power harvesting module, so that the semi-passive zero-power-consumption terminal is a true zero-power-consumption terminal.

The semi-passive zero-power-consumption terminal inherits various advantages of the passive zero-power-consumption terminal, so that the semi-passive zero-power-consumption terminal has various advantages of being small in size, light in weight, cheap in price, and long in service life.

The active zero-power-consumption terminal is described below.

In some scenarios, the zero-power-consumption terminal used may also be an active zero-power-consumption terminal, and such terminal may be provided with a built-in battery. The battery is configured to drive the low-power-consumption chip circuit of the zero-power-consumption terminal, so as to demodulate the forward link signal and modulate the reverse link signal. However, for the back-scattering link, the zero-power-consumption terminal transmits the signal by means of back-scattering. Therefore, zero power consumption of the terminal is mainly reflected in the fact that signal transmission of the reverse link does not require the power of the terminal per se, but uses a back -scattering mode.

The built-in battery in the active zero-power-consumption terminal may supply power to the RFID chip, to increase the read-write distance of the tag and improve the reliability of the communication. Therefore, the active zero-power-consumption terminal may be applied in some scenarios having relatively high requirements on communication distance, reading delay, etc.

Some zero-power-consumption terminals, such as the semi-passive zero-power-consumption terminals or the active zero-power-consumption terminals, may have the capability of active transmission. That is to say, the reverse link may communicate in a manner of the active transmission in addition to the manner of back-scattering.

As it is known, the service types of the zero-power-consumption IoT are similar to those of other IoT, and may also focus on uplink services. Based on the transmitter type of the zero-power-consumption terminal, the zero-power-consumption terminals may be classified into a zero-power-consumption device based on back-scattering, a zero-power-consumption device based on active transmitter and a zero-power-consumption device with both back-scattering and active transmitter.

The zero-power-consumption device based on back scattering is described below.

This type of zero-power-consumption devices based on back-scattering sends uplink data by means of the back-scattering. Such device is not provided with an active transmitter for the active transmission, but only provided with a transmitter for the back-scattering. Therefore, when such terminal sends the data, the network device needs to provide a carrier, and such terminal device performs back-scattering based on the carrier, thereby implementing the data transmission.

The zero-power-consumption device based on an active transmitter is described below.

This type of zero-power-consumption devices transmits uplink data by using an active transmitter with a capability of the active transmission. Therefore, when this type of zero-power-consumption device sends data, the zero-power-consumption device may send data by the active transmitter thereof, and does not require the network device to provide the carrier. The active transmitter suitable for the zero-power-consumption device may be, for example, an ultra-low-power-consumption ASK transmitter, an ultra-low-power-consumption FSK transmitter, etc. Based on current implementations, in case where this type of transmitters transmits a signal of 100µw (microwatts), the overall power consumption can be reduced to 400-600µw.

The zero-power-consumption device with both back-scattering and active transmitter is described below.

This type of terminals may support both the back-scattering and the active transmitter. The terminal may determine which following manner of transmitting the uplink signal to be used according to different situations (such as, the power level, the available environmental energy), or based on the scheduling of the network device: the manner of the back-scattering or the manner of using the active transmitter for the active transmission.

Fifthly, cellular passive Internet of Things is described below.

The cellular Internet of Things is booming. At present, IoT technologies, such as the Narrow Band Internet of Things (NB-IoT), MTC, and Reduced Capability (RedCap), have been standardized, but IoT communication requirements in many scenarios cannot be satisfied by using existing technologies. For example, the scenarios may include a strict communication environment, a scenario having a form requirement of extremely small size for the terminal, and a scenario having a requirement of extremely low cost for IoT communication.

The strict communication environment is described below.

In some IoT scenarios, extreme environments, such as high temperature, extremely low temperature, high humidity, high pressure, high radiation or high-speed movement, may be faced. The IoT scenarios may include, such as, an ultra-high voltage substation, high-speed train track monitoring, environmental monitoring in alpine zones, industrial production lines, etc. In these scenarios, existing IoT terminals may not operate due to the working environment limitations of the traditional power supply. In addition, the extreme working environments are not conducive to the maintenance of the IoT, such as, the replacement of the battery.

The scenario having a form requirement of extremely small size for terminal is described below.

In some IoT communication scenarios, such as, the food traceability, the commodity circulation, and the smart wearables, a terminal is required to have extremely small size to facilitate to be used in these scenarios. For example, the IoT terminal used for commodity management in the circulation link usually uses the form of electronic tag and is embedded into the commodity packaging in a very compact form. For another example, a lightweight wearable device may improve experience of a user while satisfying the requirements of the user.

The scenario having a requirement of extremely low cost for IoT communication is described below.

In numerous IoT communication scenarios, the cost of the IoT terminal is required to be low enough to improve competitiveness with respect to other alternative technologies. For example, in a logistics scenario or a warehousing scenario, in order to facilitate the management of a large number of circulating items, the IoT terminal may be attached to each item, so as to complete the accurate management of the entire logistics process and entire logistics period through the communication between the terminal and the logistics network. The prices of the IoT terminals are required to be competitive enough in these scenarios.

Therefore, in order to cover these requirements of the IoT communication that are not satisfied, the IoT with ultra-low cost, extremely-small size, battery-free/maintenance-free also is required to be developed in the cellular network, and the zero-power-consumption IoT just satisfies this requirement.

It is to be additionally pointed out that in the process of standardization discussion, the zero-power-consumption IoT may also be called as the Ambient power enabled IoT (Ambient IoT). The Ambient IoT (which can also be further referred to as A-IoT) means IoT devices that use various environmental energies, such as wireless radio frequency energy, light energy, solar energy, thermal energy, mechanical energy. Such devices may have no energy storage capability or have very limited energy storage capability (such as using a capacitor with a capacity of tens of µF (microfarads)).

Based on the discussion of scenarios to which the Ambient IoT is applied, the Ambient IoT may be applied in at least the following four types of scenarios:
Object recognition, such as, logistics, management of production line products, supply chain management;
Ambient monitoring, such as, monitoring of a temperature, a humidity and a harmful gas in working environment and natural environment;
Positioning, such as, indoor positioning, intelligent object searching, production line item positioning, etc.; and
Intelligent control, such as, intelligent control of various electrical appliances in the smart home (turning on and off an air conditioner, adjusting temperature), and intelligent control (automatic watering, fertilization) of various facilities in agricultural greenhouses.

Sixthly, the ADC is described below.

The ADC is configured to convert the received analog signal into a digital signal. The accuracy of the ADC is usually described by the number of bits, and the number of bits determines the size of the value that may be recorded by the ADC. For example, 8 bits record 0-255, 10 bits record 0-1023, and so on. Therefore, whenever the number of bits of the ADC increases by one bit, the range of the recorded value is doubled and the accuracy is doubled.

Due to the limitation of the cost and power consumption of the zero-power-consumption device, the receiver of the zero-power-consumption device is usually relatively simple, and the resolution of the ADC module is low, such as 1-bit or N-bits. In this way, the zero-power-consumption device may not be able to accurately measure signal strength, such as the Reference Signal Receiving Power (RSRP), etc. A large error may be caused to the measurement result.

However, in the existing cellular system, the terminal device measures the serving cell and the neighboring cell, and determines whether to perform the cell reselection or the cell handover, so as to ensure that the user always connects to the cell with better signal quality during movement and ensure the quality of the subsequent communications.

Seventhly, the method of mobility management in the cellular system is described below.

The mobility management in the cellular system have different manners according to the Radio Resource Control (RRC) state.

Cell selection and cell reselection are performed in an RRC idle/inactive state. Since the network side has not yet known the user equipment within the coverage thereof, the mobility management in this case is implemented in the UE controlled mode.
a) For initial cell selection, the UE should search for a suitable cell according to the capability thereof by scanning all carriers in the Equivalent Noise Resistance (ENR) frequency band. On each carrier frequency, the UE only search for the cell with the strongest signal. Once a suitable cell is found, the UE selects the cell.
b) The cell selection with storage information requires carrier frequency information and information related to cell parameters (optional) which are stored in advance, and are from previously received measurement control information or from previously detected cells. Once the UE finds a suitable cell, then the UE selects the found cell. If no suitable cell is found, the initial cell selection should be initiated.

Herein, different frequencies or priority information of the Radio Access Technology (RAT) provided to the UE through system information or dedicated signaling is not used during the cell selection. The serving cell may broadcast information (such as, frequency points, cell IDs, reference signal configurations) of candidate neighboring cells.

The cell handover is performed in the RRC connected state. The user equipment has set up an RRC connection with the accessed base station. The base station may perform the measurement configuration for the UE through the RRC message, and the measurement configuration includes the configurations of a frequency point, a target cell, a reference signal, etc.

Herein, the user may report a measurement result to the network, and the network determines whether to perform the cell handover and sends a handover indication. Alternatively, the user determines whether to perform cell handover and performs the cell handover according to the measurement result and a handover condition configured by the network.

The reference signals of different cells may use different sequences, different time-domain resources, different frequency-domain resources, etc. to facilitate the user to distinguish the reference signals of different cells. For example, regarding the primary synchronization signal (PSS) and the secondary synchronization signal (SSS), different Physical Cell ID (PCI) may correspond to different random sequences.

Therefore, the zero-power-consumption device (or the Ambient IoT device) has low complexity, low cost, and may be maintenance-free and battery-free. The zero-power-consumption device may be classified into: the passive zero-power-consumption terminal, the semi-passive zero-power-consumption terminal, the active zero-power-consumption terminal, etc. The energy (such as radio frequency energy, light energy, thermal energy, mechanical energy, kinetic energy, etc.) in the environment is harvested, to obtain the energy for the communication. The zero-power-consumption device may support the communication manner of back-scattering, or may further support the communication manner of active transmission.

A high-density and large-scale deployment of the zero-power-consumption devices may be implemented at a low cost. Moreover, due to characteristics of the maintenance-free and battery-free of the zero-power-consumption device, the zero-power-consumption device has huge application potential in aspects, such as, the industrial sensor network, the smart home, the smart agriculture, the logistics and warehousing, the smart wearables, and health in medical, etc. The zero-power-consumption device may be combined with a sensor device to perform the environmental monitoring processing, hazard warning, alarming, etc.

The zero-power-consumption device has the characteristics of battery-free, maintenance-free, low cost, etc. However, such characteristics may have a great impact on mobility measurement and management of the user as follows. In a first aspect, the energy harvested and stored in the zero-power-consumption device may be small, and the zero-power-consumption device is not suitable for frequent Radio Resource Management (RRM) measurements. In a second aspect, the receiver module of the zero-power-consumption device is very simple and may not be able to accurately measure for example, the RSRP/ Reference Signal Receiving Quality (RSRQ)/Signal to Interference plus Noise Ratio (SINR) of the signal.

In some deployment scenarios (such as, the smart logistics, the smart park, the wearable device, etc.), the A-IoT device is mobile, and mobility management is necessary to be performed. However, due to the limitations of the service characteristics, the capability limitations, the operating power consumption, etc. of the A-IoT per se, the receiver module of the A-IoT device is very simple. For example, the receiver module may only perform the simple envelope detection, but is unable to perform signal-related reception. In this way, the user equipment is unable to measure the downlink signal and obtain the measurement result, such as, the RSRP/RSRQ/SINR. That is to say, the accurate measurement cannot be implemented through the A-IoT to implement the cell handover, the cell reselection and the other operations.

Considering the limitations of the service characteristics, the capability limitations, the operating power consumption, etc. of the zero-power-consumption device/A-IoT device, traditional mobility management methods and flows are no longer suitable, and it is necessary to design a mobility management method and flows for the zero-power-consumption device/A-IoT device.

The technical solution of the embodiments of the present disclosure may be used to solve at least one of the aforementioned technical problems.

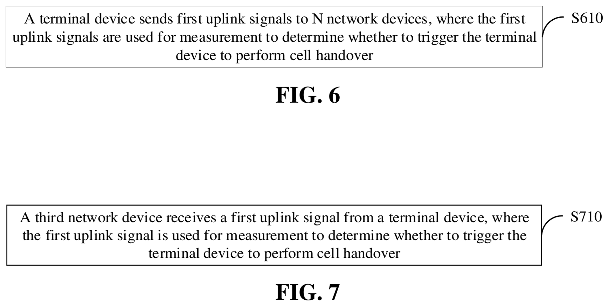

FIG. 6 is a schematic flowchart of a measurement method according to an embodiment of the present disclosure. The method may optionally be applied to the system shown in FIG. 1 or FIG. 2, which is not limited thereto. The method includes operation S610.

In operation S610, a terminal device sends first uplink signals to N network devices. The first uplink signals are used for measurement to determine whether to trigger the terminal device to perform cell handover, where N is a positive integer.

According to the method, the terminal device sends a first uplink signal to the network device, and the network device receives the first uplink signal. Whether to trigger the terminal to perform the cell handover is determined by measuring the uplink signal. Therefore, under the impact of the limitations of the service characteristics, the capability limitation and the working power consumption of the terminal device, the signal may be accurately measured, the mobility management of the terminal device may be implemented, thereby guaranteeing the communication quality.

Optionally, the terminal device may include the zero-power-consumption terminal (A-IoT device), a terminal device having a receiver which is of simple structure and is unable to perform accurate measurement, or a traditional terminal device, etc.

Optionally, the first uplink signal is sent by active transmission or back-scattering communication. For example, a terminal device (for example, a traditional terminal device or a zero-power-consumption terminal having an active transmitter) capable of generating a carrier signal for communication may send the first uplink signal by active transmission, and a terminal device (for example, the zero-power-consumption terminal having no the active transmitter) unable to generate the carrier signal for communication may send the first uplink signal by the back-scattering communication.

Optionally, the N network devices may include one or more devices within the communication range of the terminal device.

In an example, the operation that the terminal device sends the first uplink signals to the N network devices includes an operation that the terminal device broadcasts the first uplink signal to the N network devices. For example, the terminal device sends the first uplink signal via omnidirectional transmission, so that one or more devices within the communication range can receive the first uplink signal.

In another example, the operation that the terminal device sends the first uplink signals to the N network devices includes an operation that the terminal device respectively sends, to the N network devices, first uplink signals corresponding to the network devices. For example, the terminal device may respectively send first uplink signals to the specific N devices according to an indication of the serving network device or other network device. Optionally, the first uplink signals corresponding to all network devices are sequentially sent through beam scanning.

Optionally, the first uplink signal includes at least one of:
**an ID** of the terminal device;
**an ID** of a serving network device of the terminal device; or
**an ID** of a j-th network device among the N network devices, where the j-th network device is different from the serving network device, where j is a positive integer not greater than N.

For example, in case where the terminal device sends the first uplink signals through broadcast, the terminal device may carry the ID of the terminal device and the ID of the serving network device in the first uplink signal, to indicate that the first uplink signal is related to the terminal device within a serving cell of the network device.

For another example, in case where the terminal device sends the first uplink signals by beam scanning, the terminal device may carry the IDs of the network devices in first uplink signals corresponding to the respective network devices, to indicate that the first uplink signal are measurement reference signals sent to the respective network devices.

When the terminal device sends the first uplink signal by active transmission, the terminal device may send the first uplink signals to all network devices by using the same transmission power or different transmission powers based on the measurement requirement.

In an example, the operation that the terminal device respectively sends, to the N network devices, the first uplink signals corresponding to the network devices includes an operation that the terminal device respectively sends, to the N network devices, the first uplink signals corresponding to the network devices by using the same time-frequency resource and the same transmission power.

Specifically, if the terminal device sends the first uplink signals through broadcast or sends the first uplink signals by the beam scanning with the same time-frequency resource, it is necessary to use the same transmission power. In this way, different network devices can have the same initial transmission frequency when measuring the received first uplink signals, which is convenient for calculating the path loss.

In another example, the operation that the terminal device respectively sends, to the N network devices, the first uplink signal corresponding to the network devices includes an operation that the terminal device sends, to a k-th network device among the N network devices, the first uplink signal based on power information corresponding to the k-th network device in measurement-related indication information, where k is a positive integer not greater than N.

The k-th network device may be any one of the N network devices. Exemplarily, for each network device, the first uplink signal is sent to the network device by using power information corresponding to the network device

Specifically, the network device may send measurement-related indication information including pieces of power information to the terminal device, and the terminal device may send, based on the indication information, the first uplink signals to different network devices by using different pieces of power information. That is to say, if communication between the terminal device and each network device is performed according to the scheduling of network device, the network device may control the transmission power of the signal, and calculate a path loss based on the transmission power configured by the network device.

When the terminal device sends the first uplink signal in the manner of the back-scattering communication, the first uplink signal is obtained by modulating a carrier signal provided by a power supply node, or a serving network device, or each of the N network devices.

For example, the terminal device may perform the back-scattering communication based on a carrier having constant power provided by a dedicated power supply device.

For another example, the terminal device may perform the back-scattering communication by taking the signal of the original serving network device as a carrier signal. Exemplarily, the carrier signal may be the measurement-related indication information, or may be other signals.

For another example, the terminal device may perform the back-scattering communication based on the carrier signal provided by each network device.

In some embodiments, the terminal device may send the first uplink signals in case where the indication information from the network device is received by the terminal device. Specifically, before the terminal device sends the first uplink signals to the N network devices, the measurement method further includes an operation that: the terminal device receives first indication information from a first network device, where the first indication information instructs the terminal device to send the first uplink signals to the N network devices, and the N network devices include a second network device and the first network device.

Herein, the first network device may be a specific network device. Exemplarily, the first network device may be a serving network device of the terminal device. Herein, the serving network device may refer to a current serving network device, or may refer to a serving network device for the previous communication of the terminal device.

Exemplarily, the first indication information may trigger the terminal device to send the first uplink signals to the first network device and other network devices (e.g., the second network device). For example, the first indication information is sent under a predetermined situation, to trigger the terminal device to send the first uplink signals to the network devices within the communication range.

Exemplarily, the first indication information may also indicate a transmission configuration parameter or other related information of the first uplink signal.

In an example, the first indication information may include a first sequence, and the first sequence instructs the terminal device to send the first uplink signals based on a transmission configuration parameter corresponding to the first sequence.

Specifically, the first sequence is a preset sequence or a pre-agreed sequence, and the first sequence corresponds to one transmission configuration parameter or a group of transmission configuration parameters. When the terminal device recognizes that the received information includes the first sequence, the terminal device may send the first uplink signals based on the transmission configuration parameter corresponding to the first sequence.

Optionally, the transmission configuration parameter corresponding to the first sequence is pre-configured, for example, the transmission configuration parameter is agreed in a protocol, or semi-statically configured by the first network device.

Optionally, the first indication information may be control information/scheduling information carrying a parameter. Exemplarily, the first indication information may include at least one of:
a transmission configuration parameter of the first uplink signal;
an Identifier (ID) of the terminal device;
an ID of the first network device;
beam information of the first network device;
an ID of the second network device;
beam information of the second network device; or
a transmission mode of the first uplink signal.

Exemplarily, the transmission configuration parameter includes at least one of: time-domain information, frequency-domain information, spatial-domain information, code-domain information, or power-domain information. The time-domain information may include a time-domain position of the first uplink signal or a time interval between the time-domain position and a time-domain position of the first indication information. The frequency-domain information may include a frequency-domain position of the first uplink signal, or a frequency offset of the frequency-domain position relative to a frequency-domain position of the first indication information. The spatial-domain information is, for example, beam information. The code-domain information is, for example, precoding-related information. The power-domain information is, for example, a transmission power of the first uplink signal.

Exemplarily, the ID of the network device included in the first indication information is, for example, the ID of the first network device and/or the ID of the second network device, and may instruct the terminal device to determine a reception target of the first uplink signal.

Exemplarily, the beam information included in the first indication information may be used by the terminal device to send the first uplink signal to the corresponding network device through the beam scanning.

Exemplarily, the transmission mode of the first uplink signal may be unicast or broadcast. Herein, unicast means that, for example, the terminal device sequentially communicates with multiple network devices. Optionally, the beam switching or beam scanning may be performed. The broadcast means that, for example, the terminal device omnidirectionally sends the first uplink information.

It is to be understood that the first indication information may be configured differently according to different scenarios.

For example, in some scenarios, the first uplink signal is sent omnidirectionally by default. In this case, the first indication information may include the transmission configuration parameter of the first uplink signal and the ID of the terminal device, but does not include the beam information of each network device and the transmission mode.

For another example, in some scenarios where the transmission configuration parameter of the first uplink signal is pre-agreed, and the transmission mode of the first uplink signal may be configured by the serving network device, the first indication information may include the ID of the terminal device, the ID and beam information of the first network device, the ID and beam information of the second network device, and the transmission mode of the first uplink signal.

For another example, in some scenarios where the transmission mode of the first uplink signal may be configured by the serving network device, but the communication configuration between the terminal device and other network device may be configured by the other network device, the first indication information may include the ID of the terminal device, the ID and beam information of the first network device, etc.

The embodiment of the present disclosure also provides an optional implementation for the communication configuration of other network device. In the implementation, before the terminal device sends the first uplink signals to the N network devices, the measurement method further includes an operation that the terminal device receives second indication information from the second network device. The second indication information instructs the terminal device to send the first uplink signal to the second network device. That is to say, the second network device controls signal transmission between the second network device and the terminal device by sending the second indication information.

Optionally, the second network device is another network device, among the N network devices, other than the serving network device of the terminal device.

Optionally, the second indication information includes at least one of:
a transmission configuration parameter of the first uplink signal;
**an ID** of the terminal device;
a group ID of the terminal device;
**an ID** of the serving network device of the terminal device;
**an ID** of the second network device; or
beam information of the second network device.

Optionally, the second network device may send the second indication information to the terminal device based on an indication from the serving network device.

For example, the serving network device may configure the terminal device to send the first uplink signals to the N network devices through the beam scanning; and instruct the second network device to send the second indication information for indicating the transmission configuration information to the terminal device. Accordingly, the second indication information may include the transmission configuration information of the first uplink signal and the ID of the terminal device which are sent by the second network device.

For another example, after the serving network device sends the first indication information to the terminal device, if the serving network device does not receive a feedback from the terminal device within a predetermined duration, the serving network device may instruct the second network device to send the second indication information within the service coverage of the second network device, to trigger the terminal device to send the first uplink signal to the second network device to complete the measurement processing and mobility management. Accordingly, the second indication information may include the ID of the terminal device, the group ID of the terminal device, the ID of the serving network device of the terminal device, etc., so that the terminal device trusts the second network device and sends the first uplink signal to the second network device.

Optionally, the above measurement-related indication information may be sent by the network device under a predetermined situation, or may be triggered based on the information sent by the terminal device.

As an example, the terminal device may initiate a measurement procedure by using measurement assistance information. Specifically, before the terminal device receives the first indication information or the second indication information, the measurement method may further include an operation that the terminal device sends the measurement assistance information in case where a first condition is satisfied. The measurement assistance information instructs an i-th network device among the N network devices to send the measurement-related indication information, where i is a positive integer not greater than N.

The measurement-related indication information may include the aforementioned first indication information. Optionally, the measurement-related indication information may further include the aforementioned second indication information.

Exemplarily, the terminal device may send the measurement assistance information to each network device within the communication range. For example, the terminal device may broadcast the measurement assistance information.

Exemplarily, the first condition includes at least one of following conditions:
a current moment is a preset periodic node (i.e., the terminal device periodically sends measurement assistance information);
a time interval of communications between the terminal device and a serving network device of the terminal device is greater than a first threshold;
the number of the communications between the terminal device and the serving network device after a measurement is triggered is greater than a second threshold;
a strength of a first downlink signal received by the terminal device from the serving network device is lower than a third threshold;
a strength of the power supply signal received by the terminal device is lower than a fourth threshold;
a power harvesting duration of the terminal device is greater than a fifth threshold; or
a first event occurs.

Exemplarily, the first event includes that a random access is initiated and/or the terminal device moves.

In practical applications, one of the aforementioned conditions or a combination of multiple conditions may be selected for implementation according to the requirements of the scenarios or the service characteristics of the terminal device.

For example, the terminal device may periodically send the measurement assistance information, and determine the time interval (i.e., the time interval between the previous communication and the current communication) of the communications between the terminal device and the serving network device in real time, and may also send the measurement assistance information when the time interval of the communications reaches the first threshold.

For another example, the terminal device periodically communicates with the serving network device, and after the previous measurement is triggered, the number of communications between the terminal device and the serving network device is greater than the second threshold, which indicates that the terminal device has not initiated the measurement for a long time, and the terminal device may initiate the measurement through sending the measurement assistance information. If the power of the terminal device is obtained based on the power supplying signal sent by the serving network device, the terminal device may send the measurement assistance information when the strength of the power supplying signal received by the terminal device is lower than a fourth threshold or a power harvesting duration of the terminal device is greater than a fifth threshold (which indicates that the power harvesting efficiency is low).

For another example, the terminal device is generally stationary. When a sensor parameter of the terminal device changes, or terminal location information received by the terminal device from the serving network device indicates that the location of the terminal device has changed, it indicates that the terminal device has moved. In this case, the measurement assistance information is required to be sent for initiating a measurement, to find a network device with better communication quality after the movement.

Optionally, the measurement assistance information includes at least one of:
a second sequence or uplink control information for characterizing that a measurement is required;
an ID of the terminal device; or
an ID of a serving network device of the terminal device.

In practical applications, the ID of the terminal device and the ID of the serving network device are included in the measurement assistance information. Therefore, when the terminal device is outside of the service coverage of the serving network device, other network device that has received the measurement assistance information may also feedback that a measurement is required for the terminal device to the serving network device or the third-party device. Optionally, the second indication information may be sent to the terminal device from other network device that has received the measurement assistance information, so that the terminal device sends the first uplink signal to perform the measurement.

Optionally, after the terminal device sends the first uplink signal, the measurement method may further include an operation that the terminal device receives third indication information, where the third indication information indicates a measurement result.

Optionally, the third indication information may be from the serving network device, any one of the N network devices, or the third-party device, for example, a core network entity for terminal mobility management, etc.

Optionally, the third indication information may include at least one of:
information about whether cell handover is required;
**an ID** of the terminal device;
**an ID** of a serving network device of the terminal device.
**an ID** of a target cell in cell handover; or
configuration information of the target cell.

For example, the third indication information may indicate that the terminal device needs to perform cell handover, and may carry configuration information of the target cell. The terminal device may perform cell handover based on the configuration information of the target cell.

Optionally, the measurement method may further include an operation that the terminal device receives fourth indication information. The fourth indication information is from a network device of the target cell in the cell handover, and the fourth indication information indicates the configuration information of the target cell.

For example, in case where the measurement result indicated by the third indication information is that the cell handover is required, and the third indication information carries the ID of the target cell, the terminal device may receive the fourth indication information from the network device of the target cell, and perform the cell handover based on the configuration information of the target cell indicated in the fourth indication information.

For another example, in case where no third indication information is provided in the system, after the terminal device sends the first uplink signal, the network device of the target cell may send the fourth indication information to the terminal device, to indicate that the terminal device needs to switch to the target cell, and the terminal device performs cell handover based on the configuration information of the target cell indicated in the fourth indication information.

Optionally, the measurement method may further include an operation that the terminal device sends acknowledgement information to M network devices, where the M network devices include the network device of the target cell, and M is a positive integer.

Optionally, the acknowledgement information may acknowledge the third indication information or acknowledge the fourth indication information.

Optionally, the M network devices may further include an original serving network device of the terminal device. For example, in case where the original serving network device sends the third indication information, the terminal device may further send an acknowledgement for the third indication information to the original serving network device.

The measurement method in the embodiment of the present disclosure and the technical details of the network device side in the measurement method are exemplarily described below from the perspective of the network device.

FIG. 7 is a schematic flowchart of a measurement method according to another embodiment of the present disclosure. The method includes operation S710.

In operation S710, a third network device receives a first uplink signal from a terminal device. The first uplink signal is used for measurement to determine whether to trigger the terminal device to perform cell handover.

Exemplarily, the third network device may be one of the N network devices in the aforementioned embodiment.

In practical applications, each of the N devices receives and measures the first uplink signal, and obtains a measurement result for the first uplink signal. For example, the measurement result is at least one of the RSRP, the RSRQ, or the SINR. The N network devices may send the measurement results to each other or send the measurement results to the third-party device, to summarize the measurement results of all network devices. As an example, the third-party device may be a network entity in the core network, or may be a device such as a server.

For example, each network device or the third-party device may determine, according to a preset rule, whether the terminal device performs cell handover and a target cell of the cell handover. For example, the preset rule is that when the network device with the highest RSRP is not the serving network device of the terminal device, the terminal device is triggered to perform cell handover, and the target cell is the network device with the highest RSRP.

Optionally, before the first uplink signal is received from the terminal device, the measurement method may further include an operation that the third network device sends first indication information to the terminal device. The first indication information instructs the terminal device to send the first uplink signals to the N network devices, and the N network devices include the third network device and a fourth network device, where N is an integer greater than or equal to 2.

Exemplarily, the third network device is a serving network device of the terminal device. In other words, in case where the third network device is the serving network device of the terminal device, the third network device may send the first indication information to the terminal device.

Optionally, the operation that the third network device sends the first indication information to the terminal device may include an operation that the third network device sends the first indication information to the terminal device in case where a second condition is satisfied.

Exemplarily, the second condition includes at least one of following conditions:
a current moment is a preset periodic node (i.e., the third network device periodically sends the first indication information);
a time interval of communications between the terminal device and a serving network device is greater than a first threshold;
the number of the communications between the terminal device and the serving network device after a measurement is triggered is greater than a second threshold;
a strength of a second uplink signal received by the serving network device from the terminal device is lower than a sixth threshold; or
a second event occurs.

Exemplarily, the second event includes at least one of:
paging;
dynamically scheduling the terminal device to perform data transmission; or
dynamically scheduling the terminal device to perform data reception.

In practical applications, one of the aforementioned conditions or a combination of multiple conditions may be selected for implementation according to the requirements of the scenarios or the service characteristics of the terminal device.

Optionally, the first indication information may be broadcast information, multicast information, or unicast information per UE.

For example, if the second condition includes a condition that the time interval of the communications between the terminal device and the serving network device is greater than the first threshold, or includes that the number of the communications between the terminal device and the serving network device after the measurement is triggered is greater than the second threshold, the network device may send the first indication information to the terminal device in a unicast manner for the measurement of the terminal device.

For another example, the second condition includes a condition that the current moment is the preset periodic node, the third network device may periodically broadcast or multicast the first indication information, to enable the terminal device within the service coverage of the third network device or the terminal device within the specified group to send the first uplink signal.

Optionally, the first indication information includes a first sequence, and the first sequence instructs the terminal device to send the first uplink signal based on a transmission configuration parameter corresponding to the first sequence.

Optionally, the transmission configuration parameter is pre-configured or semi-statically configured by the third network device.

Optionally, the first indication information includes at least one of:
a transmission configuration parameter of the first uplink signal;
an ID of the terminal device;
an ID of the third network device;
beam information of a third network device;
an ID of a fourth network device;
beam information of a fourth network device; or
a transmission mode of the first uplink signal.

Optionally, the transmission configuration parameter includes at least one of: time-domain information, frequency-domain information, spatial-domain information, code-domain information, or power-domain information.

Optionally, the measurement method may further include an operation that the third network device sends fifth indication information to the fourth network device. The fifth indication information instructs the fourth network device to receive the first uplink signal and measure the first uplink signal.

Optionally, the fifth indication information may further instruct the fourth network device to send the second indication information to the terminal device.

For example, the third network device may configure the terminal device to send the first uplink signals to the N network devices by beam scanning, and instruct, through the fifth indication information, the fourth network device to send the second indication information for indicating the transmission configuration information to the terminal device.

For another example, after the third network device sends the first indication information to the terminal device, and if the third network device does not receive a feedback from the terminal device within a predetermined duration, the third network device may instruct, through the fifth indication information, the fourth network device to send the second indication information within the service coverage of the fourth network device, to trigger the terminal device to send the first uplink signal to the second network device to complete the measurement processing and mobility management.

Alternatively, the fifth indication information may be the same as the first indication information. That is to say, the content included in the fifth indication information is the same as the content included in the first indication information. For example, if the first indication information includes the transmission configuration parameter of the first uplink signal and the ID of the terminal device, the fifth indication information may also include the transmission configuration parameter of the first uplink signal and the ID of the terminal device, so that the fourth network device is able to accurately receive the first uplink signal.

Optionally, the fifth indication information may be different from the first indication information. That is to say, the content included in the fifth indication information is different from the content included in the first indication information. For example, the first indication information includes IDs of other network devices than the third network device and the fourth network device among the N network devices, and the fifth indication information may not include the IDs of these other network devices.

Optionally, the fifth indication information includes at least one of:
a transmission configuration parameter of the first uplink signal;
**an ID** of the terminal device;
**an ID** of the third network device;
beam information of the third network device;
**an ID** of the fourth network device;
beam information of the fourth network device; or
a transmission mode of the first uplink signal.

In some cases, the measurement method may further include an operation that the third network device sends second indication information to the terminal device. The second indication information instructs the terminal device to send the first uplink signal to the third network device.

Exemplarily, the third network device is different from the serving network device of the terminal device. That is to say, in case where the third network device is not the serving network device of the terminal device, the third network device may send the second indication information to the terminal device to control signal transmission between the third network device and the terminal device.

Exemplarily, the second indication information includes at least one of:
a transmission configuration parameter of the first uplink signal;
**an ID** of the terminal device;
a group ID of the terminal device;
**an ID** of the serving network device of the terminal device;
**an ID** of the third network device;
beam information of the third network device.

Exemplarily, the second indication information may be triggered to be sent based on sixth indication information sent by the serving network device of the terminal device. Specifically, the operation that the third network device sends the second indication information to the terminal device includes an operation that upon receiving the sixth indication information, the third network device sends the second indication information to the terminal device. The sixth indication information is from the serving network device of the terminal device, and the sixth indication information instructs the third network device to receive the first uplink signal and measure the first uplink signal.

Optionally, before the measurement-related indication information is sent to the terminal device, the measurement method may further include an operation that the third network device receives measurement assistance information from the terminal device. The measurement assistance information instructs the third network device to send the measurement-related indication information.

That is to say, the network device may be triggered by the measurement assistance information of the terminal device to send the aforementioned indication information. Exemplarily, the terminal device may send the measurement assistance information in case where the first condition is met, and the first condition may be configured with reference to the aforementioned embodiment, which is not repeated herein.

Optionally, the measurement assistance information includes at least one of:
a second sequence or uplink control information for characterizing that a measurement is required;
**an ID** of the terminal device; or
**an ID** of a serving network device of the terminal device.

Optionally, after the third network device receives the first uplink signal, the measurement method may further include an operation that the third network device sends third indication information to the terminal device. The third indication information indicates a measurement result.

Optionally, in case where the third network device is the serving network device of the terminal device, the third network device may send the third indication information to the terminal device.

Optionally, the third indication information includes at least one of:
information about whether cell handover is required;
**an ID** of the terminal device;
**an ID** of a serving network device of the terminal device.
**an ID** of a target cell of cell handover; or
configuration information of the target cell.

Optionally, after the first uplink signal is received by the third network device, the measurement method may further include an operation as follows.

In case where the third network device is a network device of the target cell of the cell handover, the third network device sends the fourth indication information to the terminal device. The fourth indication information indicates the configuration information of the target cell.

Optionally, after the third network device sends the third indication information or the fourth indication information to the terminal device, the measurement method may further include an operation that the third network device receives acknowledgement information from the terminal device.

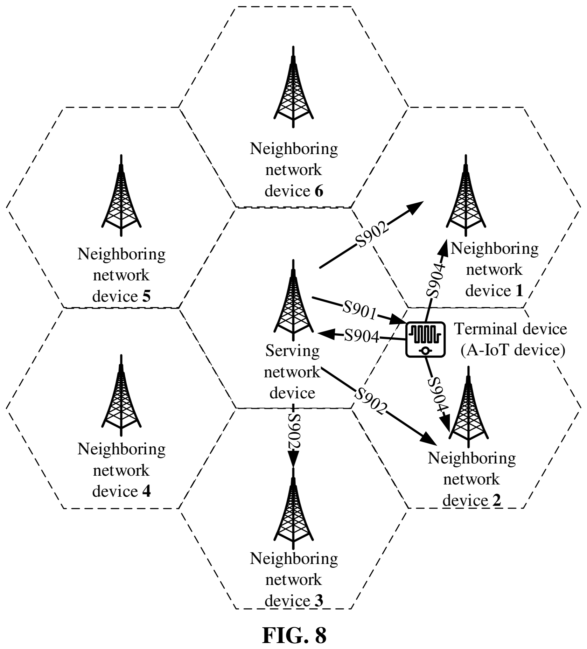

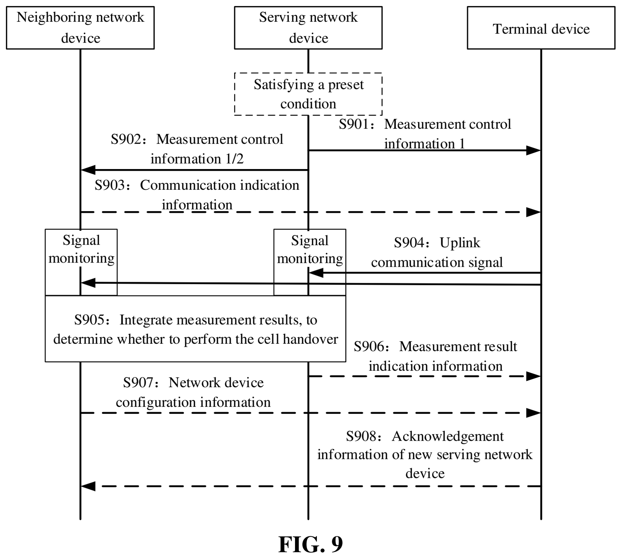

With reference to FIG. 8 and FIG. 9, a specific application example is provided below, to show technical details in the aforementioned embodiment through an interaction between the terminal device and the network device. FIG. 8 a schematic diagram of an interaction between a terminal device and a network device in the application example. FIG. 9 is a flowchart of a measurement method in the application example.

In the zero-power-consumption communication scenario, the communication between the terminal device and the network device is mostly event-triggered, or bursty and discontinuous, and the terminal device often does not need to keep connected with the network device all the time. Considering that the terminal device is movable, when the terminal device moves within the service ranges of multiple network devices, the link quality of other network device may be better than that of the current network device, and the terminal device needs to be disconnected from the current network device and matched to a new network device. Therefore, the mobility management is required.

The network device may initiate the measurement for the terminal device based on a preset condition, to determine whether cell reselection, cell handover or other processing is required. For example, the measurement for the terminal device is initiated periodically, or initiated based on at least one of the following conditions:
a time interval from the previous communication between the network device and the terminal device to the current communication between the network device and the terminal device is greater than a threshold X;
the number of communications between the network device and the terminal device after a measurement is greater than a threshold Y;
when the terminal device communicates with the network device, the signal strength of the terminal device measured by the network device is lower than the threshold Z; or
initiation of a measurement due to an emergency, such as, initiating paging.

As shown in FIG. 8 and FIG. 9, in case where the aforementioned preset condition is satisfied, the current serving network device (in some cases, it may also be the previous serving network device) of the terminal device may initiate the measurement for the terminal device. Specifically, the initiation includes operation S901.

In operation S901, the serving network device sends measurement control information 1 (corresponding to the first indication information) to the terminal device. The measurement control information 1 controls or schedules the terminal device to perform communication and send an uplink communication signal.

The measurement control information 1 may be broadcast information, multicast information, or unicast information per UE.

The measurement control information 1 may be a preset sequence associated with a measurement procedure, or control information/scheduling information carrying a configuration parameter.

When the measurement control information 1 is a sequence, the terminal device sends the uplink signal by using a communication control parameter which is agreed in the protocol or semi-statically configured by the network device. The communication control parameter includes at least one piece of control information such as time-domain control information, frequency-domain control information, spatial-domain control information, code-domain control information, or power-domain control information for sending the uplink signal.

When the measurement control information 1 is the control information/scheduling information carrying the configuration parameter, the measurement control information 1 includes at least one of:
one or more of time-domain information, frequency-domain information, spatial-domain information, code-domain information or power-domain information for sending the uplink signal;
power information of the measurement control information 1;
an ID of the terminal device;
an ID of a current serving network device;
beam information of the current serving network device;
a device ID of a neighboring network device;
beam information of the neighboring network device;
a transmission mode of the terminal device.

Herein, the transmission mode includes mode 1 or mode 2. The mode 1 means that the terminal device performs communication (optionally, beam switching) with multiple network devices in sequence; and the mode 2 means that the terminal device performs communication (optionally, omnidirectional transmission) with multiple network devices in a broadcast manner.

Optionally, as shown in FIG. 8 and FIG. 9, the measurement method further includes operation S902.

In operation S902, the serving network device sends measurement control information 1 or measurement control information 2 (corresponding to the fifth indication information, and the fifth indication information may be the same as or different from the first indication information) to the neighboring network device. Specifically, the serving network device may send the measurement control information 1 to the neighboring network device. Alternatively, the serving network device may send the measurement control information 2 different from the measurement control information 1 to the neighboring network device. For example, the measurement control information 2 is not required to include the device ID of the neighboring network device.

Optionally, as shown in FIG. 9, the measurement method further includes operation S 903.

In operation S903, the neighboring network device sends communication indication information (corresponding to the second indication information) to the terminal device.

Herein, the communication indication information controls transmission of an uplink communication signal (which is similar to the measurement control information 1 and may be used as a supplement to the measurement control information 1) when the terminal device communicates with the neighboring network device.

As shown in FIG. 8 and FIG. 9, the measurement method further includes operation S904.

In operation S904, the terminal device sends an uplink communication signal (corresponding to the first uplink signal) to the serving network device and the neighboring network device. The uplink communication signal may be broadcasted, or may be sent to the multiple network devices in sequence (based on measurement control information 1 and/or communication indication information).

Optionally, when the terminal device sends the uplink communication signal, the uplink communication signal should carry at least one of the ID of the terminal device, the ID of the original serving network device, or the ID of the neighboring network device.

Optionally, the uplink communication signals sent by the terminal device to different network devices may carry the same information; or may carry different information, such as, different IDs, and the uplink communication signals may carry IDs of the neighboring network devices based on the communication indication information based on different neighboring network devices. Optionally, the uplink communication signals may carry the ID of the original serving network device.

As shown in FIG. 9, the measurement method further includes operation S905.

In operation S905, the serving network device and the neighboring network device receive and measure the uplink communication signal sent by the terminal device, to obtain a measurement result of the same terminal device; and determine, according to the preset rule, whether to perform cell handover and a target handover cell in the cell handover.

Optionally, as shown in FIG. 9, the measurement method further includes operation S906.

In operation S906, the serving network device sends measurement result indication information (corresponding to the third indication information) to the terminal device.

Herein, the measurement result indication information may include the following indication information:
whether cell handover is required;
an ID of a target cell of cell handover; or
basic configuration information of the target cell in the handover.

The terminal device receives the measurement result indication information, and performs the cell handover when the cell handover is required.

Optionally, as shown in FIG. 9, the measurement method further includes operation S907.

In operation S907, the neighboring network device of the target handover cell may send network device configuration information (corresponding to fourth indication information) to the terminal device.

Optionally, as shown in FIG. 9, the measurement method further includes operation S908.

In operation S908, the terminal device sends acknowledgement information to the neighboring network device of the target handover cell. The acknowledgement information may be acknowledgement information for the measurement result indication information (optionally, the acknowledgement information may be sent to the original serving device and the target neighboring network device), or may be acknowledgement information for the network device configuration information.

In this case, the neighboring network device becomes a new serving network device of the terminal device.

The flow shown in FIG. 9 is a flow of the measurement method where the terminal device is still within the service range of the original serving network device. When the terminal device is outside the service range of the original serving network device, the communication indication information at least carries the ID of the terminal device, the ID of the neighboring network device, and the ID of the original serving network device. Optionally, the communication indication information may carry identification information indicating measurement to trigger the terminal device to send the uplink communication signal. The terminal device sends the uplink communication signal to the neighboring network device based on the communication indication information sent by the neighboring network device.

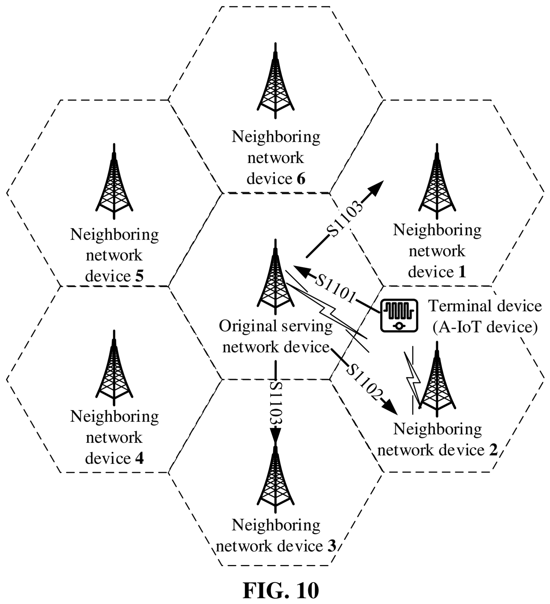

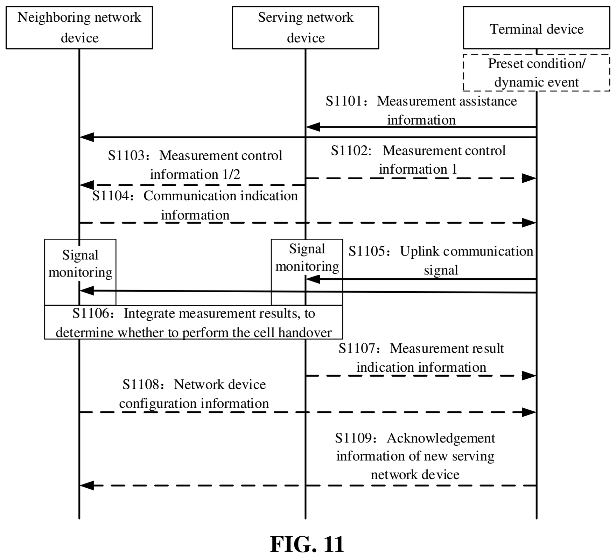

With reference to FIG. 10 and FIG. 11, another specific application example is provided below, to show technical details in the aforementioned embodiment through an interaction between the terminal device and the network device. FIG. 10 is a schematic diagram of an interaction between a terminal device and a network device in the application example. FIG. 11 is a flowchart of a measurement method in the application example.

The movement of the terminal device is apparent to the terminal device, but for the network device, the network device is generally uncertain whether the terminal moves. Therefore, in zero-power-consumption communication, the measurement may be requested or triggered by the terminal device.

As shown in FIG. 10 and FIG. 11, the measurement method includes operation S1101.

In operation S1101, when the terminal device satisfies a preset condition, the terminal device may send measurement assistance information. The measurement assistance information triggers the network device to perform measurement.

For example, the measurement assistance information is sent periodically or sent based on at least one of the following conditions:
a time interval from the current communication between the terminal device and the network device to the previous communication between the terminal device and the network device is greater than a threshold X;
the number of communications between the terminal device and the network device after a measurement is triggered is greater than the threshold Y;
when the terminal device communicates with the network device, the signal strength of the network device measured by the terminal device is lower than the threshold Z; or when the power harvesting is performed based on a radio frequency signal, the harvesting efficiency is lower than the threshold M or the power harvesting duration is greater than a threshold;
an initiation of a measurement due to an emergency, such as, initiating random access, a movement of the terminal (a change in a terminal sensor parameter, or a change in a location in terminal location information received from the network device, etc.).

Exemplarily, the measurement assistance information of the terminal device includes at least one of:
a feature sequence or control information identifying the trigger of a measurement procedure of the network device;
ID information of the terminal device; or
ID information of the original serving network device of the terminal device.

The measurement method may further include operations S1102 to S1109. The operations S1102 to S1109 are similar to operations S901 to S908 in the aforementioned application example, which are not repeated herein. It is to be noted that the terminal device may be located within the service range of the original serving network device or may be outside of the service range of the original serving network device. When the terminal device is outside of the service range of the original serving network device, the serving network device may be unable to receive the measurement configuration information, and may not trigger operation S1102, but may trigger operation S1104, and the neighboring network device sends the communication indication information to the terminal device.

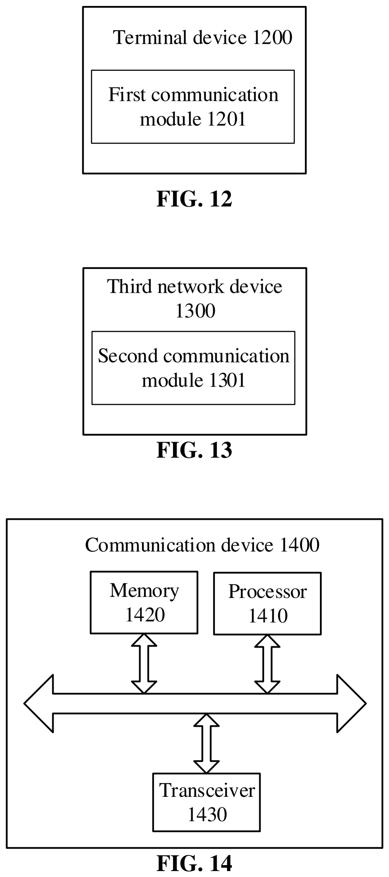

[**0365]** FIG. 12 is a schematic block diagram of a terminal device 1200 according to an embodiment of the present disclosure. The terminal device 1200 may include a first communication module 1201.

[**0366]** The first communication module 1201 is configured to send first uplink signals to N network devices, where the first uplink signals are used for measurement to determine whether to trigger the terminal device to perform cell handover, where N is a positive integer.

[**0367]** Optionally, the first uplink signal is sent through an active transmission manner or a back-scattering communication manner.

[**0368]** Optionally, the first communication module 1201 is further configured to receive first indication information from a first network device. The first indication information instructs the terminal device 1200 to send the first uplink signals to the N network devices, and the N network devices include a second network device and the first network device.

[**0369]** Optionally, the first network device is a serving network device of the terminal device 1200.

[**0370]** Optionally, the first indication information includes a first sequence, and the first sequence instructs the terminal device 1200 to send the first uplink signals based on a transmission configuration parameter corresponding to the first sequence.

[**0371]** Optionally, the transmission configuration parameter is preconfigured or is semi-statically configured by the first network device.

[**0372]** Optionally, the first indication information includes at least one of:
[**0373]** a transmission configuration parameter of the first uplink signal;
[**0374]** an Identifier (ID) of the terminal device;
[**0375]** an ID of the first network device;
[**0376]** beam information of the first network device;
[**0377]** an ID of the second network device;
[**0378]** beam information of the second network device; or
[**0379]** a transmission mode of the first uplink signal.

[**0380]** Optionally, the transmission configuration parameter includes at least one of: time-domain information, frequency-domain information, spatial-domain information, code-domain information, or power-domain information.

[**0381]** Optionally, the first communication module 1201 is further configured to: receive second indication information from the second network device. The second indication information instructs the terminal device 1200 to send the first uplink signal to the second network device.

[**0382]** Optionally, the second network device is a network device other than the serving network device of the terminal device 1200 among the N network devices.

[**0383]** Optionally, the second indication information includes at least one of:
[**0384]** a transmission configuration parameter of the first uplink signal;
[**0385]** an ID of the terminal device 1200;
[**0386]** a group ID of the terminal device 1200;
[**0387]** an ID of the serving network device of the terminal device 1200;
[**0388]** an ID of the second network device; or
[**0389]** beam information of the second network device.

[**0390]** Optionally, the first communication module 1201 is further configured to send measurement assistance information in case where a first condition is satisfied. The measurement assistance information instructs an i-th network device among the N network devices to send measurement-related indication information, where i is a positive integer not greater than N.

[**0391]** Optionally, the first condition includes at least one of following conditions:
[**0392]** a current moment is a preset periodic node;
[**0393]** a time interval of communications between the terminal device 1200 and a serving network device of the terminal device 1200 is greater than a first threshold;
[**0394]** the number of the communications between the terminal device 1200 and the serving network device after a measurement is triggered is greater than a second threshold;
[**0395]** a strength of a first downlink signal received by the terminal device 1200 from the serving network device is lower than a third threshold;
[**0396]** a strength of the power supply signal received by the terminal device 1200 is lower than a fourth threshold value;
[**0397]** a power harvesting duration of the terminal device 1200 is greater than a fifth threshold; or
[**0398]** a first event occurs.

[**0399]** Optionally, the first event includes that a random access is initiated and/or the terminal device 1200 moves.

[**0400]** Optionally, the measurement assistance information includes at least one of:
[**0401]** a second sequence or uplink control information for characterizing that a measurement is required;
[**0402]** an ID of the terminal device 1200; or
[**0403]** an ID of a serving network device of the terminal device 1200.

[**0404]** Optionally, the first communication module 1201 is further configured to: receive third indication information. The third indication information indicates a measurement result.

[**0405]** Optionally, the third indication information includes at least one of:
[**0406]** information about whether cell handover is required;
[**0407]** an ID of the terminal device 1200;
[**0408]** an ID of a serving network device of the terminal device 1200.
[**0409]** an ID of a target cell of the cell handover;
[**0410]** configuration information of the target cell.

[**0411]** Optionally, the first communication module 1201 is further configured to receive fourth indication information. The fourth indication information is from a network device of a target cell in cell handover, and the fourth indication information indicates configuration information of the target cell.

[**0412]** Optionally, the first communication module 1201 is further configured to send acknowledgement information to M network devices. The M network devices include the network device of the target cell, where M is a positive integer.

[**0413]** Optionally, the M network devices further include an original serving network device of the terminal device 1200.

[**0414]** Optionally, the first uplink signal includes at least one of:
[**0415]** an ID of the terminal device 1200;
[**0416]** an ID of a serving network device of the terminal device 1200; or
[**0417]** an ID of a j-th network device among the N network devices, where the j-th network device is different from the serving network device, and j is a positive integer not greater than N.

[**0418]** Optionally, the first communication module 1201 is configured to send the first uplink signals to the N network devices through broadcast.

[**0419]** Optionally, the first communication module 1201 is configured to respectively send, to the N network devices, first uplink signals corresponding to the network devices.

[**0420]** Optionally, the first uplink signal corresponding to each network device is sent in a manner of beam scanning.

[**0421]** Optionally, the first communication module 1201 is configured to respectively send, to the N network devices, the first uplink signals corresponding to the network devices by using the same time-frequency resource and the same transmission power.

[**0422]** Optionally, the first communication module 1201 is configured to send, to the k-th network device among the N network devices, the first uplink signal based on power information corresponding to the k-th network device in the measurement-related indication information, where k is a positive integer not greater than N.

[**0423]** Optionally, the first uplink signal is obtained by modulating a carrier signal provided by a power supply node, or a serving network device, or each of the N network devices.

[**0424]** The terminal device 1200 in the embodiments of the present disclosure is able to implement the functions of the terminal device in the aforementioned method embodiments. The flow, function, implementation and beneficial effect corresponding to each module (sub-module, unit or component, etc.) in the terminal device 1200 will not be described here with reference to the corresponding description in the above method embodiments. It is to be noted that, the functions described in each module (sub-modules, units or components, etc.) in the terminal device 1200 of the embodiments of the present disclosure may be implemented by different modules (sub-module, unit or component, etc.) or by the same module (sub-module, unit or component, etc.).

[**0425]** FIG. 13 is a schematic block diagram of a third network device 1300 according to an embodiment of the present disclosure. The third network device 1300 may include a second communication module 1301.

[**0426]** The second communication module 1301 is configured to receive a first uplink signal from a terminal device. The first uplink signal is used for measurement to determine whether to trigger the terminal device to perform cell handover.

[**0427]** Optionally, the first uplink signal is sent in an active transmission manner or a back scattering communication manner.

[**0428]** Optionally, the second communication module 1301 is further configured to send first indication information to the terminal device. The first indication information instructs the terminal device to send first uplink signals to N network devices, and the N network devices include the third network device 1300 and a fourth network device, where N is an integer greater than or equal to 2.

[**0429]** Optionally, the third network device 1300 is a serving network device of the terminal device.

[**0430]** Optionally, the second communication module 1301 is configured to send first indication information to the terminal device in case where a second condition is satisfied.

[**0431]** Optionally, the second condition includes at least one of following conditions:
[**0432]** a current moment is a preset periodic node;
[**0433]** a time interval of communications between the terminal device and the serving network device is greater than a first threshold;
[**0434]** the number of communications between the terminal device and the serving network device after a measurement is triggered is greater than a second threshold;
[**0435]** a strength of a second uplink signal received by the serving network device from the terminal device is lower than a sixth threshold value; or
[**0436]** a second event occurs.

[**0437]** Optionally, the second event includes at least one of:
[**0438]** paging;
[**0439]** dynamically scheduling the terminal device to perform data transmission; or
[**0440]** dynamically scheduling terminal device to perform data reception.

[**0441]** Optionally, the first indication information includes a first sequence, and the first sequence instructs the terminal device to send the first uplink signals based on a transmission configuration parameter corresponding to the first sequence.

[**0442]** Optionally, the transmission configuration parameter is preconfigured or is semi-statically configured by the third network device 1300.

[**0443]** Optionally, the first indication information includes at least one of:
[**0444]** a transmission configuration parameter of the first uplink signal;
[**0445]** an ID of the terminal device;
[**0446]** an ID of the third network device 1300;
[**0447]** beam information of the third network device 1300;
[**0448]** an ID of the fourth network device;
[**0449]** beam information of the fourth network device; or
[**0450]** a transmission mode of the first uplink signal.

[**0451]** Optionally, the transmission configuration parameter includes at least one of: time-domain information, frequency-domain information, spatial-domain information, code-domain information, or power-domain information.

[**0452]** Optionally, the second communication module 1301 is further configured to send fifth indication information to the fourth network device. The fifth indication information instructs the fourth network device to receive the first uplink signal and measure the first uplink signal.

[**0453]** Optionally, the fifth indication information is the same as the first indication information.

[**0454]** Optionally, the fifth indication information includes at least one of:
[***0455]*** a transmission configuration parameter of the first uplink signal;
[**0456]** an ID of the terminal device;
[**0457]** an ID of the third network device 1300;
[**0458]** beam information of the third network device 1300;
[**0459]** an ID of the fourth network device;
[**0460]** beam information of the fourth network device; or
[**0461]** a transmission mode of the first uplink signal.

[**0462]** Optionally, the second communication module 1301 is further configured to send second indication information to the terminal device. The second indication information instructs the terminal device to send the first uplink signal to the third network device 1300.

[**0463]** Optionally, the third network device 1300 is different from the serving network device of the terminal device.

[**0464]** Optionally, the second indication information includes at least one of:
[**0465]** a transmission configuration parameter of the first uplink signal;
[**0466]** an ID of the terminal device;
[**0467]** a group ID of the terminal device;
[**0468]** an ID of a serving network device of the terminal device;
[**0469]** an ID of the third network device 1300; or
[**0470]** beam information of the third network device 1300.

[**0471]** Optionally, the second communication module 1301 is configured to, upon receiving sixth indication information, send second indication information to the terminal device.

[**0472]** The sixth indication information is from the serving network device of the terminal device, and the sixth indication information instructs the third network device 1300 to receive the first uplink signal and measure the first uplink signal.

[**0473]** Optionally, the second communication module 1301 is further configured to receive measurement assistance information from the terminal device. The measurement assistance information instructs the third network device to send measurement-related indication information.

[**0474]** Optionally, the measurement assistance information includes at least one of:
[**0475]** a second sequence or uplink control information for characterizing that a measurement is required;
[**0476]** an ID of the terminal device; or
[**0477]** an ID of a serving network device of the terminal device.

[**0478]** Optionally, the second communication module 1301 is further configured to send third indication information to the terminal device. The third indication information indicates a measurement result.

[**0479]** Optionally, the third indication information includes at least one of the following information:
[**0480]** information about whether cell handover is required;
[**0481]** an ID of the terminal device;
[**0482]** an ID of a serving network device of the terminal device;
[**0483]** an ID of a target cell in the cell handover; or
[**0484]** configuration information of the target cell.

[**0485]** Optionally, the second communication module 1301 is further configured to send fourth indication information to the terminal device in case where the third network device 1300 is a network device of a target cell in cell handover. The fourth indication information indicates configuration information of the target cell.

[**0486]** Optionally, the second communication module 1301 is further configured to receive acknowledgement information from the terminal device.

[**0487]** Optionally, the first uplink signal includes at least one of:
[**0488]** an ID of the terminal device;
[**0489]** an ID of a serving network device of the terminal device; or
[**0490]** an ID of the third network device 1300.

[**0491]** The third network device 1300 in the embodiments of the present disclosure is able to implement the corresponding functions of the network device in the aforementioned method embodiments. The flow, function, implementation and beneficial effect corresponding to each module (sub-module, unit or component, etc.) in the third network device 1300 will not be described herein with reference to the corresponding description in the above method embodiments. It is to be noted that, the functions described with respect to each module (sub-modules, units or components, etc.) in the third network device 1300 of the embodiments of the present disclosure may be implemented by different modules (sub-module, unit or component, etc.) or by the same module (sub-module, unit or component, etc.).

[**0492]** FIG. 14 is a schematic structural diagram of a communication device 1400 according to an embodiment of the present disclosure. The communication device 2200 includes a processor 2210. The processor 1410 may call and run computer programs from a memory to cause the communication device 1400 to implement the methods in the embodiments of the present disclosure.

[**0493]** In an embodiment, the communication device 1400 may further include a memory 1420. The processor 1410 may call and run computer programs from the memory 1420 to enable the communication device 1400 to implement the methods in the embodiments of the present disclosure.

[**0494]** The memory 1420 may be a separate device independent of the processor 1410 or may be integrated into the processor 1410.

[**0495]** In an embodiment, the communication device 1400 may also include a transceiver 1430. The processor 1410 may control the transceiver 1430 to communicate with other devices. Specifically, the transceiver 430 may be controlled to send information or data to other devices or receive information or data from other devices.

[**0496]** The transceiver 1430 may include a transmitter and a receiver. The transceiver 1430 may further include an antenna(s), and the number of which may be one or more.

[**0497]** In an embodiment, the communication device 1400 may be the terminal device in the embodiments of the present disclosure, and the communication device 1400 may implement corresponding flows implemented by the terminal device in each method of the embodiments of the present disclosure, which will not be elaborated herein for brevity.

[**0498]** In an embodiment, the communication device 1400 may be the network device in the embodiments of the present disclosure, and the communication device 1400 may implement corresponding flows implemented by the network device in each method of the embodiments of the present disclosure, which will not be elaborated herein for brevity.

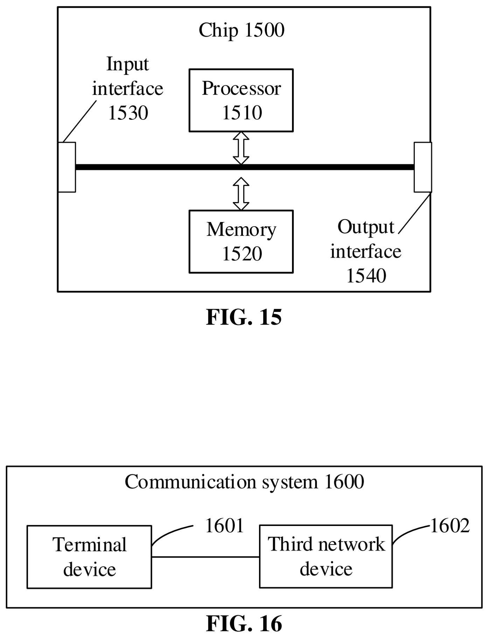

[**0499]** FIG. 15 is a schematic structural diagram of a chip 1500 according to an embodiment of the present disclosure. The chip 1500 includes a processor 1510, and the processor 1510 may call and run computer programs from a memory to implement the methods in the embodiments of the disclosure.

[**0500]** In an embodiment, the chip 1500 may further include a memory 1520. The processor 1510 may call and run the computer programs from the memory 1520 to implement the method performed by the terminal device in embodiments of the present disclosure.

[**0501]** The memory 1520 may be a separate device independent of the processor 1510 or may be integrated into the processor 1510.

[**0502]** In an embodiment, the chip 1500 may further include an input interface 1530. The processor 1510 may control the input interface 1530 to communicate with the other device or chip. Specifically, the input interface 1530 is controlled to acquire information or data from the other device or chip.

[**0503]** In an embodiment, the chip 1500 may further include an output interface 1540. The processor 1510 may control the output interface 1540 to communicate with the other device or chip. Specifically, the output interface 1530 is controlled to output information or data to the other device or chip.

[**0504]** In an embodiment, the chip can be applied to the terminal device in the embodiments of the present disclosure, and the chip may implement corresponding flows implemented by the terminal device in each method of the embodiments of the present disclosure, which will not be elaborated herein for brevity.

[**0505]** In an embodiment, the chip can be applied to the network device in the embodiments of the present disclosure, and the chip may implement corresponding flows implemented by the network device in each method of the embodiments of the present disclosure, which will not be elaborated herein for brevity.

[**0506]** It is to be understood that the chips mentioned in the embodiments of the present disclosure may also be referred to as system level chips, system chips, chip systems or on-chip system chips, etc.

[**0507]** The above processors may be general purpose processors, Digital Signal Processors (DSPSs), Field Programmable Gate Arrays (FPGAs), Application Specific Integrated Circuits (ASICs) or other programmable logic devices, transistor logic devices, and discrete hardware components. The general-purpose processor mentioned above may be a microprocessor or any conventional processor or the like

[**0508]** The memory mentioned above may be a volatile memory or a non-volatile memory or may include both the volatile memory and the non-volatile memory. The non-volatile memory may be a Read-only Memory (ROM), a Programmable ROM (PROM), an Erasable programmable ROM (EPROM), an Electrically EPROM (EEPROM) or a flash memory. The volatile memory may be a Random Access Memory (RAM).

[**0509]** It is to be understood that the above memory is exemplary but not restrictive. For example, the memory in the embodiments of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), a Direct Rambus RAM (DR RAM), etc. That is to say, the memory in the embodiments of the present disclosure is intended to include, but not limited to, these and any other suitable types of memory.

[**0510]** FIG. 16 is a schematic block diagram of a communication system 1600 according to an embodiment of the present disclosure. The communication system 1600 includes a terminal device 1601 and a third network device 1602.

[**0511]** The terminal device 1601 is configured to perform the method performed by the terminal device in any of the aforementioned method embodiments.

[**0512]** The third network device 1602 is configured to perform the method performed by the third network device in any of the aforementioned method embodiments.

[**0513]** The foregoing embodiments may be implemented in whole or in part by software, hardware, firmware, or any combination thereof. When implemented by software, it may be implemented in whole or in part in the form of a computer program product. The computer program product includes one or more computer instructions. When the computer program instructions are loaded and executed on a computer, all or part of the processes or functions according to the embodiments of the present disclosure are generated. The computer may be a general-purpose computer, a special-purpose computer, a computer network, or other programmable devices. The computer instructions may be stored in a computer-readable storage medium or transmitted from a computer-readable storage medium to another computer-readable storage medium. The computer instructions may be transmitted from a website site, a computer, a server, or a data center to another website site, computer, server, or data center in a wired manner (such as a coaxial cable, an optical fiber, and a Digital Subscriber Line (DSL)) or a wireless manner (such as an infrared, wireless, and microwave manner). The computer-readable storage medium may be any available medium that may be accessed by a computer or a data storage device such as a server including one or more available medium integrations and a data center. The available medium may be a magnetic medium (such as a floppy disk, a hard disk, and a magnetic tape), an optical medium (such as a Digital Versatile Disc (DVD)), a semiconductor medium (such as a Solid State Disk (SSD)), or the like.

[**0514]** It is to be understood that, in various embodiments of the present disclosure, a magnitude of a sequence number of each process does not mean an execution sequence and the execution sequence of each process should be determined by its function and an internal logic and should not form any limit to an implementation process of the embodiments of the disclosure.

[**0515]** Those skilled in the art may clearly learn about that regarding specific working processes of the system, device and unit described above, reference may be made to the corresponding processes in the method embodiments and will not be elaborated herein for convenient and brief description.

[**0516]** Only the specific implementations of the disclosure are described above, and the scope of protection of the disclosure is not limited thereto. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A measurement method, comprising:
sending, by a terminal device, first uplink signals to N network devices, wherein the first uplink signals are used for measurement to determine whether to trigger the terminal device to perform cell handover, N being a positive integer.

2. The method of claim 1, wherein the first uplink signal is sent in an active transmission manner or a back-scattering communication manner.

3. The method of claim 1 or 2, further comprising:
receiving, by the terminal device, first indication information from a first network device, wherein the first indication information instructs the terminal device to send the first uplink signals to the N network devices, and the N network devices comprise a second network device and the first network device.

4. The method of claim 3, wherein the first network device is a serving network device of the terminal device.

5. The method of claim 3 or 4, wherein the first indication information comprises a first sequence, and the first sequence instructs the terminal device to send the first uplink signals based on a transmission configuration parameter corresponding to the first sequence.

6. The method of claim 5, wherein the transmission configuration parameter is preconfigured or is semi-statically configured by the first network device.

7. The method of claim 3 or 4, wherein the first indication information comprises at least one of:
a transmission configuration parameter of the first uplink signal;
an Identifier (ID) of the terminal device;
an ID of the first network device;
beam information of the first network device;
an ID of the second network device;
beam information of the second network device; or
a transmission mode of the first uplink signal.

8. The method of any one of claims 5 to 7, wherein the transmission configuration parameter comprises at least one of time-domain information, frequency-domain information, spatial-domain information, code-domain information, or power-domain information.

9. The method of any one of claims 1 to 8, further comprising:
receiving, by the terminal device, second indication information from a second network device, wherein the second indication information instructs the terminal device to send the first uplink signal to the second network device.

10. The method of claim 9, wherein the second network device is a network device other than a serving network device of the terminal device among the N network devices.

11. The method of claim 9 or 10, wherein the second indication information comprises at least one of:
a transmission configuration parameter of the first uplink signal;
an ID of the terminal device;
a group ID of the terminal device;
an ID of a serving network device of the terminal device;
an ID of the second network device; or
beam information of the second network device.

12. The method of any one of claims 1 to 11, further comprising:
sending, by the terminal device, measurement assistance information in case where a first condition is satisfied, wherein the measurement assistance information instructs an i-th network device among the N network devices to send measurement-related indication information, i being a positive integer not greater than N.

13. The method of claim 12, wherein the first condition comprises at least one of following conditions:
a current moment is a preset periodic node;
a time interval of communications between the terminal device and a serving network device of the terminal device is greater than a first threshold;
a number of the communications between the terminal device and the serving network device after a measurement is triggered is greater than a second threshold;
a strength of a first downlink signal received by the terminal device from the serving network device is lower than a third threshold;
a strength of a power supply signal received by the terminal device is lower than a fourth threshold value;
a power harvesting duration of the terminal device is greater than a fifth threshold; or
a first event occurs.

14. The method of claim 13, wherein the first event comprises an event that a random access is initiated and/or the terminal device moves.

15. The method of any one of claims 12 to 14, wherein the measurement assistance information comprises at least one of:
a second sequence or uplink control information for characterizing that a measurement is required;
an ID of the terminal device; or
an ID of a serving network device of the terminal device.

16. The method of any one of claims 1 to 15, further comprising:
receiving, by the terminal device, third indication information, wherein the third indication information indicates a measurement result.

17. The method of claim 16, wherein the third indication information comprises at least one of:
information about whether cell handover is required;
an ID of the terminal device;
an ID of a serving network device of the terminal device;
an ID of a target cell in the cell handover; or
configuration information of the target cell.

18. The method of any one of claims 1 to 17, further comprising:
receiving, by the terminal device, fourth indication information, wherein the fourth indication information is from a network device of a target cell in the cell handover, and the fourth indication information indicates configuration information of the target cell.

19. The method of claim 17 or 18, further comprising:
sending, by the terminal device, acknowledgement information to M network devices, wherein the M network devices comprise the network device of the target cell, M being a positive integer.

20. The method of claim 19, wherein the M network devices further comprise an original serving network device of the terminal device.

21. The method of any one of claims 1 to 20, wherein the first uplink signal comprises at least one of:
an ID of the terminal device;
an ID of a serving network device of the terminal device; or
an ID of a j-th network device among the N network devices, wherein the j-th network device is different from a serving network device, j being a positive integer not greater than N.

22. The method of any one of claims 1 to 21, wherein the sending, by the terminal device, the first uplink signals to N network devices comprises:
sending, by the terminal device, the first uplink signals to the N network devices through broadcast.

23. The method of any one of claims 1 to 21, wherein the sending, by the terminal device, the first uplink signals to N network devices comprises:
respectively sending, by the terminal device to the N network devices, the first uplink signals corresponding to the N network devices.

24. The method of claim 23, wherein the first uplink signals corresponding to the N network devices are sent in a beam scanning manner.

25. The method of claim 23 or 24, wherein the respectively sending, by the terminal device to the N network devices, the first uplink signals corresponding to the N network devices comprises:
respectively sending, by the terminal device to the N network devices, the first uplink signals corresponding to the N network devices by using a same time-frequency resource and a same transmission power.

26. The method of claim 23 or 24, wherein the respectively sending, by the terminal device to the N network devices, the first uplink signals corresponding to the N network devices comprises:
sending, by the terminal device to a k-th network device among the N network devices, the first uplink signal based on power information corresponding to the k-th network device in measurement-related indication information, k being a positive integer not greater than N.

27. The method of any one of claims 1 to 24, wherein the first uplink signal is obtained by modulating a carrier signal provided by a power supply node, or a serving network device, or each of the N network devices.

28. A measurement method, comprising:
receiving, by a third network device, a first uplink signal from a terminal device, wherein the first uplink signal is used for measurement to determine whether to trigger the terminal device to perform cell handover.

29. The method of claim 28, wherein the first uplink signal is sent in an active transmission manner or a back-scattering communication manner.

30. The method of claim 28 or 29, further comprising:
sending, by the third network device, first indication information to the terminal device, wherein the first indication information instructs the terminal device to send first uplink signals to N network devices, and the N network devices comprise the third network device and a fourth network device, N being an integer greater than or equal to 2.

31. The method of claim 30, wherein the third network device is a serving network device of the terminal device.

32. The method of claim 31, wherein the sending, by the third network device, the first indication information to the terminal device comprises:
sending, by the third network device, the first indication information to the terminal device in case where a second condition is satisfied.

33. The method of claim 32, wherein the second condition comprises at least one of following conditions:
a current moment is a preset periodic node;
a time interval of communications between the terminal device and the serving network device is greater than a first threshold;
a number of communications between the terminal device and the serving network device after a measurement is triggered is greater than a second threshold;
a strength of a second uplink signal received by the serving network device from the terminal device is lower than a sixth threshold value; or
a second event occurs.

34. The method of claim 33, wherein the second event comprises at least one of:
paging;
dynamically scheduling the terminal device to perform data transmission; or
dynamically scheduling the terminal device to perform data reception.

35. The method of any one of claims 30 to 34, wherein the first indication information comprises a first sequence, and the first sequence instructs the terminal device to send the first uplink signals based on a transmission configuration parameter corresponding to the first sequence.

36. The method of claim 35, wherein the transmission configuration parameter is preconfigured or is semi-statically configured by the third network device.

37. The method of any one of claims 30 to 34, wherein the first indication information comprises at least one of:
a transmission configuration parameter of the first uplink signal;
an Identifier (ID) of the terminal device;
an ID of the third network device;
beam information of the third network device;
**an ID** of the fourth network device;
beam information of the fourth network device; or
a transmission mode of the first uplink signal.

38. The method of any one of claims 35 to 37, wherein the transmission configuration parameter comprises at least one of: time-domain information, frequency-domain information, spatial-domain information, code-domain information, or power-domain information.

39. The method of any one of claims 30 to 38, further comprising:
sending, by the third network device, fifth indication information to the fourth network device, wherein the fifth indication information instructs the fourth network device to receive the first uplink signal and measure the first uplink signal.

40. The method of claim 39, wherein the fifth indication information is the same as the first indication information.

41. The method of claim 39, wherein the fifth indication information comprises at least one of:
a transmission configuration parameter of the first uplink signal;
an ID of the terminal device;
an ID of the third network device;
beam information of the third network device;
**an ID** of the fourth network device;
beam information of the fourth network device; or
a transmission mode of the first uplink signal.

42. The method of claim 28 or 29, further comprising:
sending, by the third network device, second indication information to the terminal device, wherein the second indication information instructs the terminal device to send the first uplink signal to the third network device.

43. The method of claim 42, wherein the third network device is different from a serving network device of the terminal device.

44. The method of claim 42 or 43, wherein the second indication information comprises at least one of:
a transmission configuration parameter of the first uplink signal;
an ID of the terminal device;
a group ID of the terminal device;
an ID of a serving network device of the terminal device;
an ID of the third network device; or
beam information of the third network device.

45. The method of any one of claims 42 to 44, wherein the sending, by the third network device, second indication information to the terminal device comprises:
in case where sixth indication information is received by the third network device, sending, by the third network device, the second indication information to the terminal device,
wherein the sixth indication information is from a serving network device of the terminal device, and the sixth indication information instructs the third network device to receive the first uplink signal and measure the first uplink signal.

46. The method of any one of claims 28 to 45, further comprising:
receiving, by the third network device, measurement assistance information from the terminal device, wherein the measurement assistance information instructs the third network device to send measurement-related indication information.

47. The method of claim 46, wherein the measurement assistance information comprises at least one of:
a second sequence or uplink control information for characterizing that a measurement is required;
an ID of the terminal device; or
an ID of a serving network device of the terminal device.

48. The method of any one of claims 28 to 47, further comprising:
sending, by the third network device, third indication information to the terminal device, wherein the third indication information indicates a measurement result.

49. The method of claim 48, wherein the third indication information comprises at least one of:
information about whether cell handover is required;
an ID of the terminal device;
an ID of a serving network device of the terminal device;
an ID of a target cell in the cell handover; or
configuration information of the target cell.

50. The method of any one of claims 28 to 49, further comprising:
sending, by the third network device, fourth indication information to the terminal device in case where the third network device is a network device of a target cell in the cell handover, wherein the fourth indication information indicates configuration information of the target cell.

51. The method of any one of claims 48 to 50, further comprising:
receiving, by the third network device, acknowledgement information from the terminal device.

52. The method of any one of claims 28 to 51, wherein the first uplink signal comprises at least one of:
an ID of the terminal device;
an ID of a serving network device of the terminal device; or
an ID of the third network device.

53. A terminal device, comprising:
a first communication module configured to send first uplink signals to N network devices, wherein the first uplink signals are used for measurement to determine whether to trigger the terminal device to perform cell handover, N being a positive integer.

54. The terminal device of claim 53, wherein the first uplink signal is sent in an active transmission manner or a back-scattering communication manner.

55. The terminal device of claim 53 or 54, wherein the first communication module is further configured to:
receive first indication information from a first network device, wherein the first indication information instructs the terminal device to send the first uplink signals to the N network devices, and the N network devices comprise a second network device and the first network device.

56. The terminal device of claim 55, wherein the first network device is a serving network device of the terminal device.

57. The terminal device of claim 55 or 56, wherein the first indication information comprises a first sequence, and the first sequence instructs the terminal device to send the first uplink signals based on a transmission configuration parameter corresponding to the first sequence.

58. The terminal device of claim 57, wherein the transmission configuration parameter is preconfigured or is semi-statically configured by the first network device.

59. The terminal device of claim 55 or 56, wherein the first indication information comprises at least one of:
a transmission configuration parameter of the first uplink signal;
an Identifier (ID) of the terminal device;
an ID of the first network device;
beam information of the first network device;
an ID of the second network device;
beam information of the second network device; or
a transmission mode of the first uplink signal.

60. The terminal device of any one of claims 57 to 59, wherein the transmission configuration parameter comprises at least one of time-domain information, frequency-domain information, spatial-domain information, code-domain information, or power-domain information.

61. The terminal device of any one of claims 53 to 60, wherein the first communication module is further configured to:
receive second indication information from a second network device, wherein the second indication information instructs the terminal device to send the first uplink signal to the second network device.

62. The terminal device of claim 61, wherein the second network device is a network device other than a serving network device of the terminal device among the N network devices.

63. The terminal device of claim 61 or 62, wherein the second indication information comprises at least one of:
a transmission configuration parameter of the first uplink signal;
an ID of the terminal device;
a group ID of the terminal device;
an ID of a serving network device of the terminal device; or
an ID of the second network device.

64. The terminal device of any one of claims 53 to 63, wherein the first communication module is further configured to:
send measurement assistance information in case where a first condition is satisfied, wherein the measurement assistance information instructs an i-th network device among the N network devices to send measurement-related indication information, i being a positive integer not greater than N.

65. The terminal device of claim 64, wherein the first condition comprises at least one of following conditions:
a current moment is a preset periodic node;
a time interval of communications between the terminal device and a serving network device of the terminal device is greater than a first threshold;
a number of the communications between the terminal device and the serving network device after a measurement is triggered is greater than a second threshold;
a strength of a first downlink signal received by the terminal device from the serving network device is lower than a third threshold;
a strength of a power supply signal received by the terminal device is lower than a fourth threshold value;
a power harvesting duration of the terminal device is greater than a fifth threshold; or
a first event occurs.

66. The terminal device of claim 65, wherein the first event comprises an event that a random access is initiated and/or the terminal device moves.

67. The terminal device of any one of claims 64 to 66, wherein the measurement assistance information comprises at least one of:
a second sequence or uplink control information for characterizing that a measurement is required;
an ID of the terminal device; or
an ID of a serving network device of the terminal device.

68. The terminal device of any one of claims 53 to 67, wherein the first communication module is further configured to:
receive third indication information, wherein the third indication information indicates a measurement result.

69. The terminal device of claim 68, wherein the third indication information comprises at least one of:
information about whether cell handover is required;
an ID of the terminal device;
an ID of a serving network device of the terminal device;
an ID of a target cell in the cell handover; or
configuration information of the target cell.

70. The terminal device of any one of claims 53 to 69, wherein the first communication module is further configured to:
receive fourth indication information, wherein the fourth indication information is from a network device of a target cell in the cell handover, and the fourth indication information indicates configuration information of the target cell.

71. The terminal device of claim 69 or 79, wherein the first communication module is further configured to:
send acknowledgement information to M network devices, wherein the M network devices comprise the network device of the target cell, M being a positive integer.

72. The terminal device of claim 71, wherein the M network devices further comprise an original serving network device of the terminal device.

73. The terminal device of any one of claims 53 to 72, wherein the first uplink signal comprises at least one of:
an ID of the terminal device;
an ID of a serving network device of the terminal device; or
an ID of a j-th network device among the N network devices, wherein the j-th network device is different from a serving network device, j being a positive integer not greater than N.

74. The terminal device of any one of claims 53 to 73, wherein the first communication module is configured to:
send the first uplink signals to the N network devices through broadcast.

75. The terminal device of any one of claims 53 to 73, wherein the first communication module is configured to:
respectively send, to the N network devices, the first uplink signals corresponding to the N network devices.

76. The terminal device of claim 75, wherein the first uplink signals corresponding to the N network devices are sent in a beam scanning manner.

77. The terminal device of claim 75 or 76, wherein the first communication module is configured to:
respectively send, to the N network devices, the first uplink signals corresponding to the N network devices by using a same time-frequency resource and a same transmission power.

78. The terminal device of claim 75 or 76, wherein the first communication module is configured to:
send, via the terminal device to a k-th network device among the N network devices, the first uplink signal based on power information corresponding to the k-th network device in measurement-related indication information, k being a positive integer not greater than N.

79. The terminal device of any one of claims 53 to 76, wherein the first uplink signal is obtained by modulating a carrier signal provided by a power supply node, or a serving network device, or each of the N network devices.

80. A third network device, comprising:
a second communication module configured to receive a first uplink signal from a terminal device, wherein the first uplink signal is used for measurement to determine whether to trigger the terminal device to perform cell handover.

81. The third network device of claim 80, wherein the first uplink signal is sent in an active transmission manner or a back-scattering communication manner.

82. The third network device of claim 80 or 81, wherein the second communication module is further to:
send first indication information to the terminal device, wherein the first indication information instructs the terminal device to send first uplink signals to N network devices, and the N network devices comprise the third network device and a fourth network device, N being an integer greater than or equal to 2.

83. The third network device of claim 82, wherein the third network device is a serving network device of the terminal device.

84. The third network device of claim 83, wherein the second communication module is configured to:
send the first indication information to the terminal device in case where a second condition is satisfied.

85. The third network device of claim 84, wherein the second condition comprises at least one of:
a current moment is a preset periodic node;
a time interval of communications between the terminal device and the serving network device is greater than a first threshold;
a number of communications between the terminal device and the serving network device after a measurement is triggered is greater than a second threshold;
a strength of a second uplink signal received by the serving network device from the terminal device is lower than a sixth threshold value; or
a second event occurs.

86. The third network device of claim 85, wherein the second event comprises at least one of:
paging;
dynamically scheduling the terminal device to perform data transmission; or
dynamically scheduling the terminal device to perform data reception.

87. The third network device of any one of claims 82 to 86, wherein the first indication information comprises a first sequence, and the first sequence instructs the terminal device to send the first uplink signals based on a transmission configuration parameter corresponding to the first sequence.

88. The third network device of claim 87, wherein the transmission configuration parameter is preconfigured or is semi-statically configured by the third network device.

89. The third network device of any one of claims 82 to 86, wherein the first indication information comprises at least one of:
a transmission configuration parameter of the first uplink signal;
an Identifier (ID) of the terminal device;
an ID of the third network device;
beam information of the third network device;
an ID of the fourth network device;
beam information of the fourth network device; or
a transmission mode of the first uplink signal.

90. The third network device of any one of claims 87 to 89, wherein the transmission configuration parameter comprises at least one of time-domain information, frequency-domain information, spatial-domain information, code-domain information, or power-domain information.

91. The third network device of any one of claims 82 to 90, wherein the second communication module is further configured to:
send fifth indication information to the fourth network device, wherein the fifth indication information instructs the fourth network device to receive the first uplink signal and measure the first uplink signal.

92. The third network device of claim 91, wherein the fifth indication information is the same as the first indication information.

93. The third network device of claim 91, wherein the fifth indication information comprises at least one of:
a transmission configuration parameter of the first uplink signal;
an ID of the terminal device;
an ID of the third network device;
beam information of the third network device;
an ID of the fourth network device;
beam information of the fourth network device; or
a transmission mode of the first uplink signal.

94. The third network device of claim 80 or 81, wherein the second communication module is further configured to:
send second indication information to the terminal device, wherein the second indication information instructs the terminal device to send the first uplink signal to the third network device.

95. The third network device of claim 94, wherein the third network device is different from a serving network device of the terminal device.

96. The third network device of claim 94 or 95, wherein the second indication information comprises at least one of:
a transmission configuration parameter of the first uplink signal;
an ID of the terminal device;
a group ID of the terminal device;
an ID of a serving network device of the terminal device;
an ID of the third network device; or
beam information of the third network device.

97. The third network device of any one of claims 94 to 96, wherein the second communication module is configured to:
in case where the sixth indication information is received by the third network device, send the second indication information to the terminal device,
wherein the sixth indication information is from a serving network device of the terminal device, and the sixth indication information instructs the third network device to receive the first uplink signal and measure the first uplink signal.

98. The third network device of any one of claims 80 to 97, wherein the second communication module is further configured to:
receive measurement assistance information from the terminal device, wherein the measurement assistance information instructs the third network device to send measurement-related indication information.

99. The third network device of claim 98, wherein the measurement assistance information comprises at least one of:
a second sequence or uplink control information for characterizing that a measurement is required;
an ID of the terminal device; or
an ID of a serving network device of the terminal device.

100. The third network device of any one of claims 80 to 99, wherein the second communication module is further configured to:
send third indication information to the terminal device, wherein the third indication information indicates a measurement result.

101. The third network device of claim 100, wherein the third indication information comprises at least one of:
information about whether cell handover is required;
an ID of the terminal device;
an ID of a serving network device of the terminal device;
an ID of a target cell in the cell handover; or
configuration information of the target cell.

102. The third network device of any one of claims 80 to 101, wherein the second communication module is further configured to:
send fourth indication information to the terminal device in case where the third network device is a network device of a target cell in the cell handover, wherein the fourth indication information indicates configuration information of the target cell.

103. The third network device of any one of claims 100 to 102, wherein the second communication module is further configured to:
receive acknowledgement information from the terminal device.

104. The third network device of any one of claims 80 to 103, wherein the first uplink signal comprises at least one of:
an ID of the terminal device;
an ID of a serving network device of the terminal device; or
an ID of the third network device.

105. A terminal device comprising a processor and a memory, wherein the memory is configured to store a computer program, and a processor is configured to invoke and run the computer program stored in the memory, to enable the terminal device to perform the method of any one of claims 1 to 27.

106. A third network device comprising a processor and a memory, wherein the memory is configured to store a computer program, and a processor is configured to invoke and run the computer program stored in the memory, to enable the third network to perform the method of any one of claims 28 to 52.

107. A chip comprising a processor configured to invoke and run a computer program from a memory, to enable a device on which the chip is mounted to perform the method of any one of claims 1 to 52.

108. A computer-readable storage medium configured to store a computer program, wherein the computer program causes a device to perform the method of any one of claims 1 to 52 when the computer program is executed by the device.

109. A computer program product comprising computer program instructions that cause a computer to perform the method of any one of claims 1 to 52.

110. A computer program that causes a computer to perform the method of any one of claims 1 to 52.
